# EUROPEAN PATENT APPLICATION

(11) **EP 2 386 942 A1**
(43) Date of publication of application: **16.11.2011**
(21) Application number: 11154918.4
(22) Date of filing: 18.02.2011
(51) Int. Cl.: G06F 3/14, H04L 29/08

(54) **Communication method, master display device, slave display device, and communication system furnished therewith**

(30) Priority: 14.05.2010 JP 2010112237
(71) Applicant: Funai Electric Co., Ltd., Daito-shi Osaka 574-0013 (JP)
(72) Inventor: Suzuki, Yoshihiro, Daito-shi Osaka 574-0013 (JP)
(74) Representative: Grünecker, Kinkeldey, Stockmair & Schwanhäusser

(57) **Abstract**

A master display device 10a and slave display devices 10b and 10c share structured display information in which a plurality of html fragmentary information items each including display data are structured through communication via a network and further produce the same display on the basis of the structured display information. The master display device 10a, upon modifying the html fragmentary information item, sends the slave display devices 10b and 10c a notice reporting that the html fragmentary information item is modified and an ID (ID information) for identifying the modified html fragmentary information item.

## Description

### BACKGROUND OF THE INVENTION

### 1. Field of the Invention

The present invention relates to a communication method, a master display device, a slave display device, and a communication system furnished therewith.

### 2. Description of Related Art

Conventionally, communication systems have been used in which personal computers, serving as information terminal devices, are interconnected with one another via a network to electronically share presentation materials and memorandums. Examples of such systems include electronic conference systems in which personal computers are connected via a network to share information, such as presentation materials, their page positions to be displayed, and memorandums, via the network, thereby achieving a virtual conference. In such an electronic conference system, a sense of unity as a conference is promoted by taking a video of one conference site with a camera and sending it to the other conference site and vice versa, and the proceedings are expedited by sending presentation screens for participants who are speaking in one conference site to the other conference site and vice versa.

For example, Japanese Patent Application Laid-Open No. 2004-350134 discloses an electronic conference system that includes a plurality of client computers, a server, and a network connecting these devices with one another and that enables the client computers to exchange utterance information, video information, and the like among them and to produce display screens, such as the agenda and proceedings of the conference, in real time.

Furthermore, Japanese Patent Application Laid-Open No. 2002-215553 discloses a technology for providing a chatting room by granting a right to users who can participate in a space for sharing information.

However, conventional technologies such as those disclosed in Japanese Patent Application Laid-Open No. 2004-350134 and Japanese Patent Application Laid-Open No. 2002-215553 cannot synchronize the displays on the client computers while maintaining the displayed information prepared by structuring, on the display screens, information exchanged among the client computers.

### SUMMARY OF THE INVENTION

The present invention has been devised in view of the above described problem, and an object of the invention is to provide a communication method, a master display device, a slave display device, and a communication system furnished therewith that enable a plurality of display devices to easily synchronize structured display information in which a plurality of fragmentary information items each including display data are structured.

In order to achieve the above described object, a communication method according to an aspect of the invention is a communication method in a communication system in which a master display device and a slave display device share structured display information in which a plurality of fragmentary information items each including display data are structured through communication via a network and the master display device and the slave display device produce the same display on the basis of the structured display information. The master display device, upon modifying the fragmentary information item constituting a part of the structured display information, sends the slave display device a notice reporting that the fragmentary information item is modified and ID information for identifying the modified fragmentary information item.

Furthermore, in order to achieve the above described object, a master display device according to an aspect of the invention includes a communication unit for sending a slave display device structured display information in which a plurality of fragmentary information items each including display data are structured and for, when the fragmentary information item constituting a part of the structured display information is modified, sending the slave display device a notice reporting that the fragmentary information item is modified and ID information for identifying the modified fragmentary information item, and a display unit for producing the same display as the slave display device on the basis of the structured display information shared with the slave display device.

Furthermore, in order to achieve the above described object, a slave display device according to an aspect of the invention includes a communication unit for receiving structured display information in which a plurality of fragmentary information items each including display data are structured from a master display device and for, when the master display device modifies the fragmentary information item constituting a part of the structured display information, receiving a notice reporting that the fragmentary information item is modified and ID information for identifying the modified fragmentary information item from the master display device, and a display unit for producing the same display as the master display device on the basis of the structured display information shared with the master display device.

Furthermore, in order to achieve the above described object, in a communication system according to an aspect of the invention, the above described master display device and the above described slave display device share structured display information in which a plurality of fragmentary information items each including display data are structured through communication via a network and produce the same displays on the basis of the structured display information.

According to the invention, the master display device, upon modifying a fragmentary information item constituting a part of the structured display information, sends the slave display device a notice reporting that the fragmentary information item constituting a part of the structured display information has been modified and ID information for identifying the modified fragmentary information item. As a result, when a fragmentary information item constituting a part of the structured display information is modified, the slave display device can quickly learn that the fragmentary information item has been modified without inquiring the master display device whether any fragmentary information item constituting a part of the structured display information has been modified or not and can recognize which fragmentary information item has been modified through the ID information. Therefore, when a fragmentary information item constituting a part of the structured display information is modified, the slave display device can quickly and reliably perform operations such as requesting the master display device to send the modified fragmentary information item and can share the same structured display information with the master display device. As a result, the master display device and the slave display device can easily synchronize structured display information in which a plurality of fragmentary information items are structured and can quickly and reliably synchronize their displays based on the structured display information.

Further features and advantages of the invention will become more apparent from embodiments described below.

### BRIEF DESCRIPTION OF THE DRAWINGS

Fig. 1 is a diagram showing an example of a communication system according to the invention.
Fig. 2 is a configuration diagram showing the configuration of a multi-site electronic conference system according to an embodiment of the invention.
Fig. 3 is a configuration diagram showing the configurations of display devices according to an embodiment of the invention.
Fig. 3A is a configuration diagram showing the configuration of a master display device in a multi-site electronic conference system according to the embodiment.
Fig. 3B is a configuration diagram showing the configuration of a slave display device in the multi-site electronic conference system according to the embodiment.
Fig. 4 is a configuration diagram showing the configuration of an information terminal device according to an embodiment of the invention.
Fig. 5 is a configuration diagram showing the configuration of structured display information according to an embodiment of the invention.
Fig. 6 is a diagram for describing a display screen based on structured display information according to an embodiment of the invention.
Fig. 7 is a diagram showing an example of an actual display screen based on structured display information according to an embodiment of the invention.
Fig. 8 is a diagram showing an example of an html fragmentary information item represented as an html file according to an embodiment of the invention.
Fig. 9 is a sequence diagram for describing a procedure by which a master display device establishes a virtual conference room in a multi-site electronic conference system according to an embodiment of the invention.
Fig. 10 is a sequence diagram for describing a procedure by which an information terminal device participates in a multi-side electronic conference system according to an embodiment of the invention.
Fig. 11 is a sequence diagram for describing a procedure by which terminal devices share structured display information in a multi-site electronic conference system according to an embodiment of the invention.
Fig. 12 is a sequence diagram for describing a procedure by which a master display device prepares for synchronization with a slave display device in a multi-site electronic conference system according to an embodiment of the invention.
Fig. 13 is a sequence diagram for describing a procedure by which a master display device sets a payload for each XMPP node information item in a multi-site electronic conference system according to an embodiment of the invention.
Fig. 14 is a sequence diagram for describing a procedure by which a slave display device finds out the structural correlation among XMPP node information items and their attribute information in a multi-site electronic conference system according to an embodiment of the invention.
Fig. 15 is a sequence diagram for describing a procedure by which a slave display device subscribes to an XMPP node information item in a multi-site electronic conference system according to an embodiment of the invention.
Fig. 16 is a sequence diagram for describing a procedure by which information provided by a user terminal device G is displayed on a display unit of a display device in a multi-site electronic conference system according to an embodiment of the invention.
Fig. 17 is a sequence diagram for describing a procedure by which attribute information is set for an XMPP node information item for remark and a procedure by which presented information is displayed in a multi-site electronic conference system according to an embodiment of the invention.
Fig. 18 is a sequence diagram for describing a procedure by which a display screen of a master display device and a display screen of a slave display device are synchronized in a multi-site electronic conference system according to an embodiment of the invention.

### DETAILED DESCRIPTION OF PREFERRED EMBODIMENTS

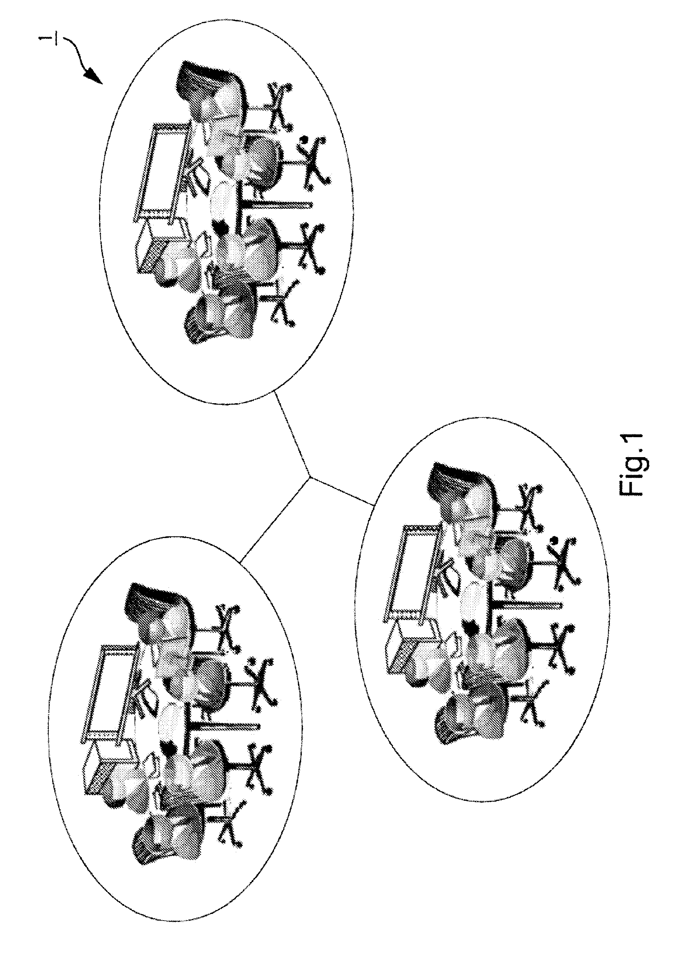

The present invention will now be described with reference to the drawings. Examples of a communication system according to the present invention may include multi-site electronic conference systems used within communities such as workplaces and schools, video telephone conversations between family members who are geographically separated from each other, online meetings within communities, and the like. Fig. 1 is a diagram showing an example of a communication system according to the invention. Fig. 1 shows a multi-site electronic conference system in which a plurality of virtual conference rooms (electronic conference systems) located at geographically separated places are connected with one another via a network 3 and a plurality of users participating in a virtual conference can make discussion and present their opinions, presentation materials, and the like. The multi-site electronic conference system 1 shown in Fig. 1 will be hereinafter described as an example.

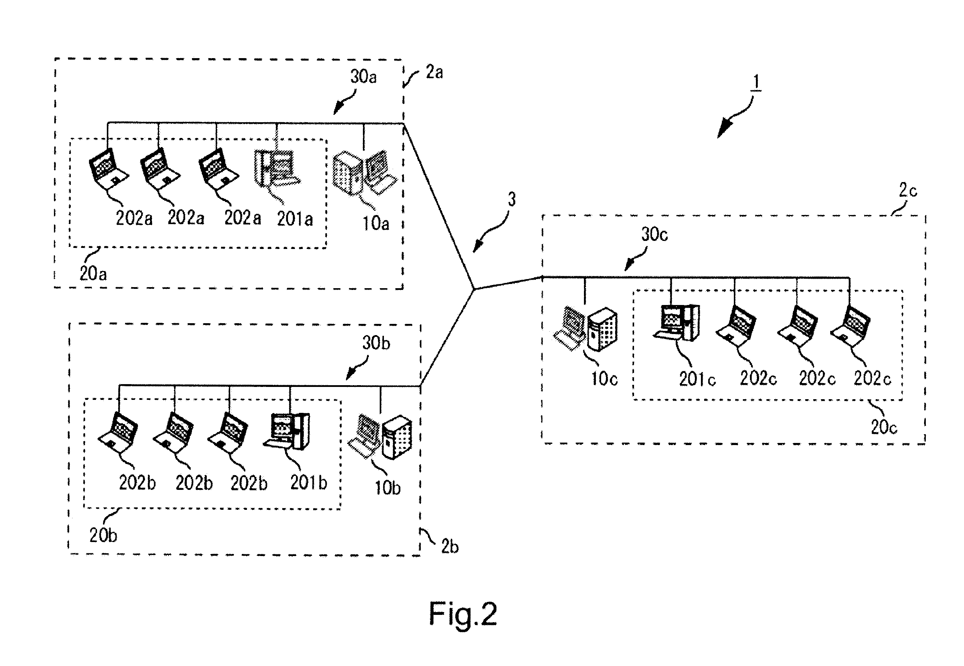

The multi-site electronic conference system 1 according to the present embodiment is a communication system in which a plurality of virtual conference rooms (electronic conference systems) located at geographically separated places are connected via a network. Fig. 2 is a configuration diagram showing the configuration of a multi-site electronic conference system according to an embodiment of the present invention. As shown in Fig. 2, in the multi-site electronic conference system 1, an electronic conference system 2a located at a site A, an electronic conference system 2b located at a site B, and an electronic conference system 2c located at a site C are mutually connected with one anther via a network 3, such as the Internet.

Furthermore, in the electronic conference system 2 at each site, a display device 10 and information terminal devices 20 are connected via a network 30. It is to be noted that the number of the information terminal devices 20 may be one or may be more as shown in Fig. 2. In addition, any terminal device capable of communication, other than the display devices 10 and the information terminal devices 20, may also be connected.

The display devices 10a, 10b, and 10c in the electronic conference systems 2a, 2b, and 2c at all the sites are in communication with one another via the network 3 and the networks 30. Furthermore, as described below, the information terminal devices 20a, 20b, and 20c in the electronic conference systems 2a, 2b, and 2c at all the sites are also in communication with a predetermined display device (the display device 10a in the electronic conference system 2a at the site A, for example, as described below) via the network 3 and the networks 30.

Here, the network 3 connecting the electronic conference systems 2 at all the sites and the networks 30 connecting the terminal devices in each electronic conference system 2 may be any communication medium capable of mutual communication, and examples of such communication media include LANs and WANs, communication networks such as the Internet, wireless LANs and wireless mobile services employing Femto base stations, and wireless communication networks such as Bluetooth.

Furthermore, the multi-site electronic conference system 1 is a multi-user communication system constructed using the Extensible Messaging and Presence Protocol (XMPP) described below. Specifically, among the display devices 10a, 10b, and 10c as well as between the predetermined display device 10a and the information terminal devices 20a, 20b, and 20c at all the sites, communication based on XMPP is performed via the network 3 and the networks 30. As a result, in the multi-site electronic conference system 1, real time messaging (information exchange) can be achieved among the display devices 10a, 10b, and 10c as well as between the predetermined display device 10a and the information terminal devices 20a, 20b, and 20c at all the sites, as described below. Therefore, information presented by users, such as utterances (remarks), presentation materials, agenda and proceedings, can be transmitted and received in real time. In particular, among the display devices 10a, 10b, 10c, structured display information in which a plurality of fragmentary information items each including display data are structured can be transmitted and received in real time to synchronize, on the basis of the structured display information, the display screens of the display devices 10a, 10b, and 10c showing the utterances (remarks), the presentation materials, the agenda and proceedings, and the like presented by the users. It is to be noted that the details of the structured display information will be described later.

Here, XMPP that is used in the multi-site electronic conference system 1 according to the present embodiment will be described. XMPP is an XML-based protocol that is now under standardization by the XMPP Standards Foundation (XSF), which has become independent of the XMPP working group of the Internet Engineering Task Force (IETF). Using XMPP, a variety of applications, including instant messaging, presence ("what state the counterpart is now placed in"), multi-user chatting, audio or video telephone, coordinated working, content syndication, and the like, can be dynamically controlled to perform real time communication in communication systems such as the Internet. A plurality of extension protocols (XMPP Extension Protocols: XEPs) suitable for these purposes have been standardized in XMPP.

In the multi-site electronic conference system 1 according to the embodiment, various protocols defined in XMPP are used. Here, the protocols particularly important to understand the multi-site electronic conference system 1 according to the embodiment, i.e., XEP-0030 (Service Discovery), XEP-0045 (Multi-User Chat), XEP-0060 (Publish-Subscribe), and XEP-0071 (XHTML-IM), will be described.

XEP-0030 (Service Discovery) is a protocol that defines a function for detecting information. This protocol will be hereinafter referred to as DISCO. As described below, in the multi-site electronic conference system 1 according to the embodiment, the terminal devices in the electronic conference systems 2 at all the sites (the display devices 10 and the information terminal devices 20) use DISCO to search the multi-site electronic conference system 1 to participate.

Next, XEP-0045 (Multi-User Chat) is a protocol that defines a multi-user chatting function that enables a plurality of users to exchange messages within a particular community (for example, a chatting room) in a virtual space on a network. This protocol will be hereinafter referred to as MUC. In MUC, in addition to the standard chatting functions, such as the chatting room topics function and the chatting room invitations function, there have been defined functions for controlling the chatting room, such as a function for kicking and banning a user from the chatting room, and a function for assigning roles and affiliations to users of the chatting room, which will be described below.

It is to be noted that a role is a temporary right level that is granted to a user using the chatting service. In MUC, there have been defined several roles, including "moderator" that is authorized to kick a user and delete his/her remarks, "participant" that is authorized to speak, and "visitor" that is not authorized to speak, for example. On the other hand, an affiliation represents the position of a user using the chatting service, and the user can keep his/her affiliation in a valid state permanently even after he/she has finished using the chatting service. In MUC, there have been defined several affiliations, including "owner" that has established the chatting room, "administrator" that controls and manages the chatting room, "member" that is other user, and "outcast" that has been kicked out of the chatting room and is not authorized to enter it again, for example.

The multi-site electronic conference system 1 according to the embodiment is managed using a multi-user chatting function based on MUC (hereinafter referred to as an MUC function).

Next, XEP-0060 (Publish-Subscribe) is a protocol that defines a function that enables an information-receiving terminal device to set an information-sending terminal device in advance to send, when the information-sending terminal device modifies information, a notice reporting that the information is modified from the information-sending terminal device to the information-receiving terminal device (i.e., a subscribing function), and a function that enables an information-sending terminal device to send, when the information-sending terminal device modifies information which has been subscribed to by information-receiving terminal devices, a notice reporting that the information has been modified to all the information-receiving terminal devices that have subscribed to the modified information (i.e., a publishing function). This protocol will be hereinafter referred to as pubsub.

The multi-site electronic conference system 1 according to the embodiment uses a function based on pubsub (hereinafter referred to as a pubsub function) to achieve a communication system in which information is synchronized in real time.

Next, XEP-0071 (XHTML-IM) is a protocol that defines exchanging of instant messages including lightweight text markups (tags) using a subset of html. Using this protocol, a message format using a small range of commonly used html elements, attributes, and style properties that are suitable for use in instant messaging can be defined. The multi-site electronic conference system 1 according to the embodiment performs transmission and reception of information including extended attribute information described below on the basis of XEP-0071 (XHTML-IM).

It is to be noted that in the multi-site electronic conference system 1 according to the embodiment, the above described MUC and pubsub functions are provided from a predetermined display device selected from among the display devices 10 in the electronic conference systems 2 at all the sites to the other terminal devices (the other display devices 10, and the information terminal devices 20 at all the sites). Hereinafter, it is assumed that the display device 10a in the electronic conference system 2a at the site A provides the MUC and pubsub functions to the terminal devices in the multi-site electronic conference system 1 (the display devices 10 and the information terminal devices 20). Therefore, in the following description, the display device 10a at the site A will be referred to as a master display device in order to distinguish it from the other display devices 10b and 10c, and the other display devices 10b and 10c will be referred to as slave display devices.

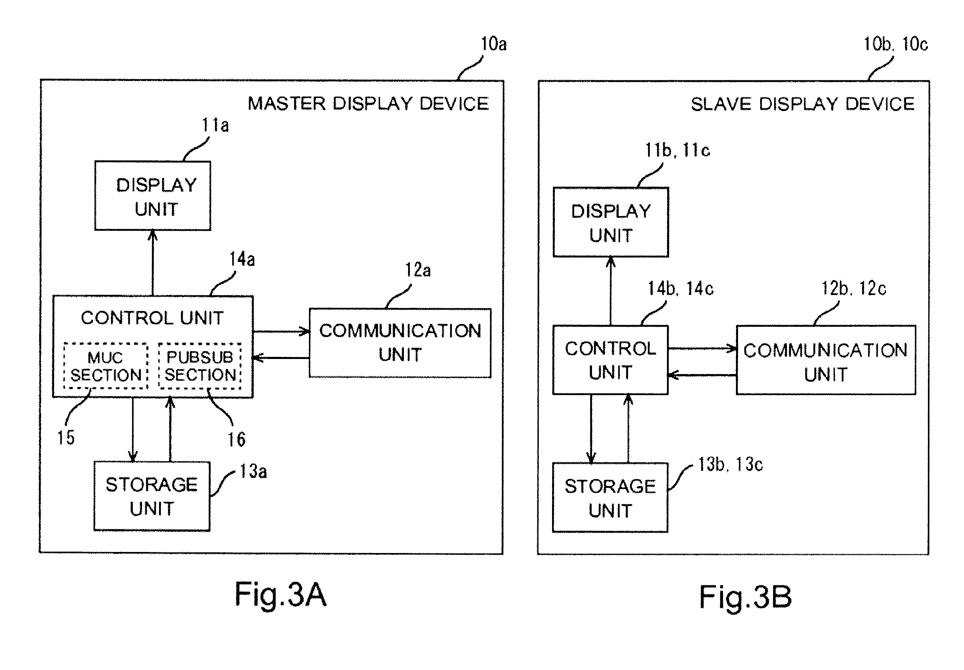

The specific configurations of the display devices 10 (the master display device 10a and the slave display devices 10b and 10c) in the multi-site electronic conference system 1 according to the embodiment will now be described with reference to the drawings. Fig. 3 is a configuration diagram showing the configurations of the display devices according to the embodiment. Here, Fig. 3A is a configuration diagram showing the configuration of the master display device in the multi-site electronic conference system according to the embodiment, and Fig. 3B is a configuration diagram showing the configuration of the slave display devices in the multi-site electronic conference system according to the embodiment.

The master display device 10a not only functions as the display device 10 in the electronic conference system 2a at the site A, but also functions as the display device that performs communication with the other terminal devices (the slave display devices 10b and 10c, and the information terminal devices 20a, 20b, and 20c at all the sites) via the network 3 and the networks 30. Furthermore, the master display device can perform communication based on XMPP. As shown in Fig. 3A, the master display device 10a includes a display unit 11 a for producing a display on the basis of structured display information in which a plurality of fragmentary information items each including display data are structured and that is intended to display opinions, presentation materials, agenda and proceedings, and the like presented to the multi-site electronic conference system 1, a communication unit 12a for performing transmission and reception of information to and from the other terminal devices (the slave display devices 10b and 10c, and the information terminal devices 20a, 20b, and 20c at all the sites), a storage unit 13a for storing structured display information and information transmitted and received by the communication unit 12a, and a control unit 14a for controlling the display of information on the display unit 11a, the transmission and reception operations of information in the communication unit 12a, the storage and reading operations of information in the storage unit 13a, and the like. Furthermore, the control unit 14a may perform editing of the structured display information, generation and modification of information included in the structured display information (html fragmentary information items described below, display data included in the html fragmentary information items to be displayed on the display unit 11a, meta information, and the like), generation of html files written in html from the entire structured display information, and the like, as needed.

In addition, the control unit 14a in the master display device 10a also includes an MUC section 15 for providing the MUC function to the terminal devices (the display devices 10 and the information terminal devices 20) in the multi-site electronic conference system 1 and a pubsub section 16 for providing the pubsub function to the terminal devices (the display devices 10 and the information terminal devices 20). It is to be noted that since in the multi-site electronic conference system 1 according to the embodiment, only the master display device 10a provides the MUC and pubsub functions to the terminal devices (the display devices 10 and the information terminal devices 20) in the multi-site electronic conference system 1, information (opinions, presentation materials, and the like) presented to the virtual conference room (the multi-site electronic conference system 1) by the information terminal devices 20a, 20b, and 20c at all the sites is processed in the master display device 10a.

On the other hand, the slave display devices 10b and 10c not only function as the display devices 10 in the electronic conference systems 2b and 2c at the sites B and C, but also function as the display devices that perform communication with the master display device 10a via the network 3 and the networks 30. Furthermore, the slave display devices 10b and 10c can perform communication based on XMPP. As shown in Fig. 3B, the slave display devices 10b and 10c include display units 11b and 11c for producing a display on the basis of structured display information in which a plurality of fragmentary information items each including display data are structured and that is intended to display opinions, presentation materials, agenda and proceedings, and the like presented to the multi-site electronic conference system 1, communication units 12b and 12c for performing transmission and reception of information to and from the master display device 10a, storage units 13b and 13c for storing structured display information and information transmitted and received by the communication units 12b and 12c, control units 14b and 14c for controlling the display of information on the display units 11b and 11c, the transmission and reception operations of information in the communication units 12b and 12c, the storage and reading operations of information in the storage units 13b and 13c, and the like. Furthermore, the control units 14b and 14c may also perform editing of the structured display information, generation and modification of information included in the structured display information (html fragmentary information items described below, display data contained in the html fragmentary information items to be displayed on the display units 11b and 11c, meta information, and the like), generation of html files written in html from the entire structured display information, and the like, as needed.

In addition, all the master display device 10a and the slave display devices 10b and 10c can use the Document Object Model (DOM) described below as structured display information for displaying opinions, presentation materials, agenda and proceedings, and the like presented to the multi-site electronic conference system 1 according to the embodiment. Here, DOM (Document Object Model) that is used in the master display device 10a and the slave display devices 10b and 10c will be described. DOM is a standardized Application Program Interface (API) for html, the Extensible Markup Language (XML), and the like, which has been standardized by the World Wide Web Consortium (W3C). Using DOM, it is possible to dynamically access programs and scripts without depending on any platform or language and to handle, as objects, contents (text information, image information, audio information, etc.) and their structures (layouts) and styles when they are displayed. Furthermore, DOM also functions as an interface to achieve control through a script language, such as JavaScript, or the like. In general, it can be said that web pages, XML pages, and the like that are displayed when the Internet or the like is used are documents written in html, XML, or the like.

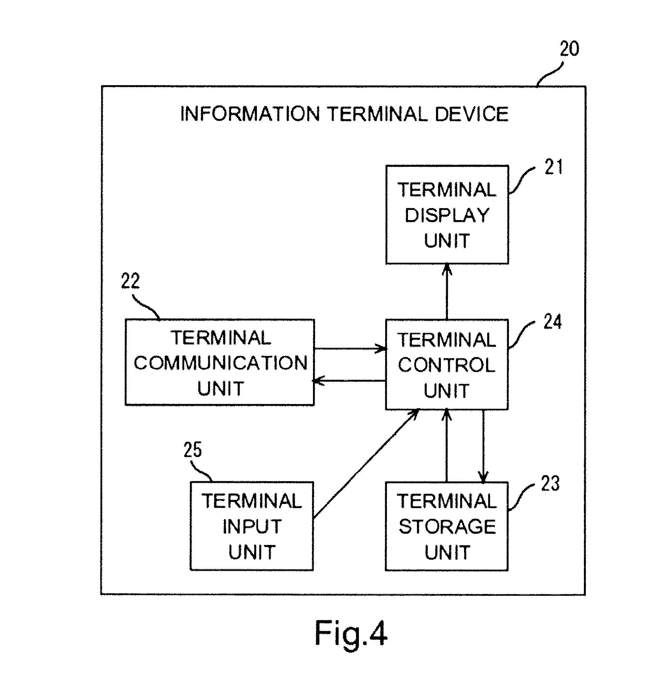

Next, the configuration of the information terminal devices 20 (the information terminal devices 20a, 20b, and 20c at all the sites) in the multi-site electronic conference system 1 according to the embodiment will be described. Fig. 4 is a configuration diagram showing the configuration of the information terminal devices according to the embodiment. The information terminal devices 20 are the information terminal devices that perform communication with the master display device 10a via the network 3 and the networks 30, and perform communication based on XMPP.

Furthermore, as shown in Fig. 4, the information terminal device 20 includes a terminal communication unit (communication unit) 22 for performing transmission and reception of information to and from the master display device 10a, a terminal display unit (display unit) 21 for producing a display based on information received by the terminal communication unit 22 and a display of information input into a terminal input unit 25, a terminal storage unit (storage unit) 23 for storing information transmitted and received by the terminal communication unit 22, a terminal control unit (control unit) 24 for controlling the transmission and reception operations in the terminal communication unit 22, the storage and reading operations of information in the terminal storage unit 23, and the like, and the terminal input unit (input unit) 25 for a user to input information. Furthermore, as described below, the terminal control unit 24 may also perform editing of an html fragmentary information item constituting a part of structured display information, generation and modification of information included in the html fragmentary information item (display data to be displayed on the display units 11 in the display devices 10, meta information including information associated with the display data, and the like), and the like, as needed. Although examples of the information terminal devices 20 may include, for example, portable terminal devices such as portable telephones and PDAs, they are not limited thereto, and any information terminal device capable of communication may be used.

The information terminal devices 20a, 20b, and 20c included in the electronic conference systems at all the sites each have been assigned a role such as "moderator" and "participant", which indicates a temporary right level in the multi-site electronic conference system 1 using the MUC function. In the following description, information terminal devices 20 that have been assigned the role "moderator" will be referred to as moderator terminal devices 201 and information terminal devices 20 that have been assigned the role "participant" will be referred to as user terminal devices 202. Furthermore, it is to be noted that although in the following description of the multi-site electronic conference system 1 according to the embodiment, the affiliation assigned to each of the information terminal devices 20 will not be described, it is assumed that the moderator terminal devices 201 have the affiliations "owner" and "administrator" and the user terminal devices 202 have the affiliation "member," and a description of other affiliations, such as "visitor" and "outcast", will be eliminated.

The moderator terminal device 201 at each site functions as the information terminal device 20 that controls opinions (i.e., display data to be displayed on the display units 11 in the display devices 10) that are presented to the master display device 10a by the information terminal devices 20 at that site. Furthermore, the moderator terminal device 201 at each site can also generate an ID (ID information) for identifying display data that is presented to the master display device 10a by the information terminal devices 20 at that site and is displayed on the display units 11 in the display units 10, access right and user information described below, and the like. In this manner, the moderator terminal device expedites the proceedings of, and manages, the electronic conference system 2 at that site.

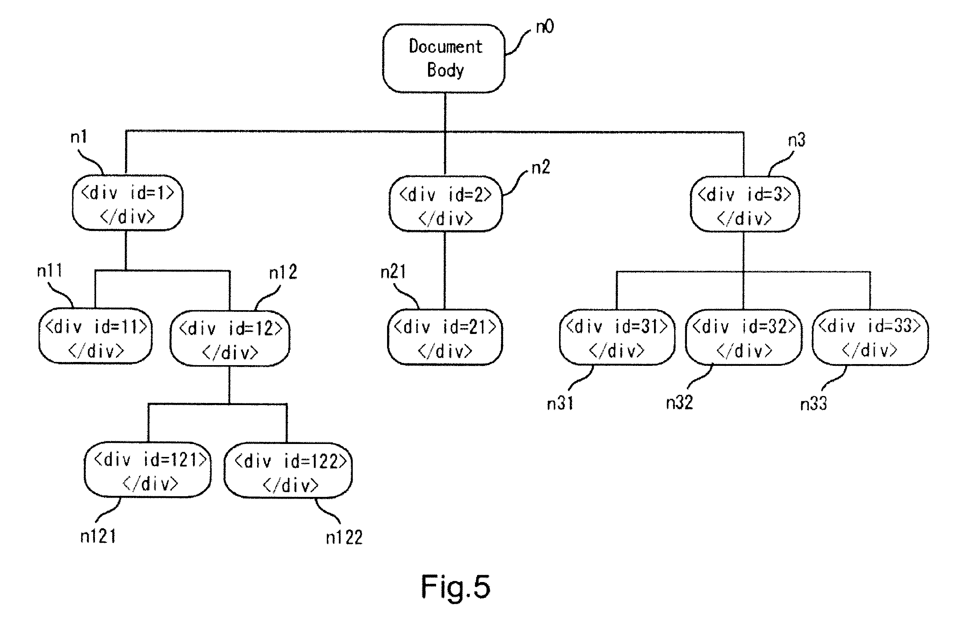

Structured display information for displaying opinions, presentation materials, agenda and proceedings, and the like presented to the multi-site electronic conference system 1 on the display unit 11a in the master display device 10a and the display units 11b and 11c in the slave display devices 10b and 10c will now be described. The structured display information is structured information in which a plurality of fragmentary information items each including display data have a mutual structural correlation with one another. In addition, the structured display information is not limited to any specific structure and may assume any structure such as a tree structure. Individual information items that constitute such structured information will be hereinafter referred to as html fragmentary information items. Fig. 5 is a configuration diagram showing the configuration of structured display information according to an embodiment of the invention. As shown in Fig. 5, in the structured display information, the html fragmentary information items have a hierarchical correlation with one another with an html fragmentary information item n0 placed at the top level. Here, in such a structure, any html fragmentary information item that is placed one level above, and is associated with, a certain html fragmentary information item will be referred to as a parent html fragmentary information item, and any html fragmentary information item that is placed one level below, and is associated with, a certain html fragmentary information item will be referred to as a child html fragmentary information item.

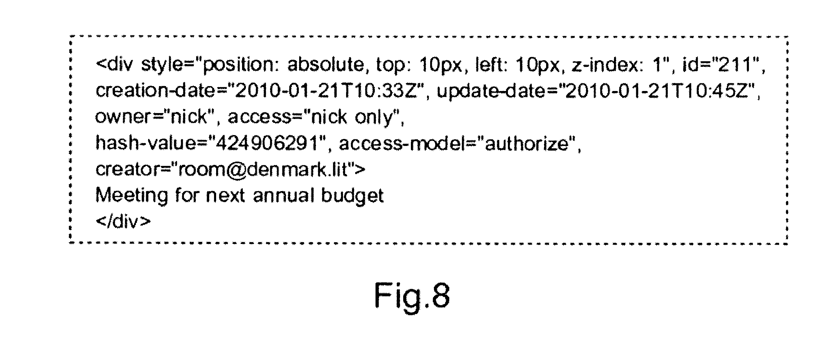

Furthermore, the html fragmentary information items constituting the structured display information each include display data to be displayed on the display units 11 in the display devices 10. In addition to the display data, the html fragmentary information items may also include meta information, which is information associated with the display data (attribute information). Fig. 8 is a diagram showing an example of an html fragmentary information item represented as an html file according to an embodiment of the invention. The html fragmentary information item shown in Fig. 8 includes display data to be displayed on the display units 11 in the display devices 10 and meta information including information associated with the display data (attribute information).

It is to be noted that although in Fig. 8, the display data included in the html fragmentary information item is text data, data in any format that can be represented in a version of html suitable for communication based on XMPP, such as image data, audio data, and video data, can be used and there is not limit to the combination of such data items.

Furthermore, the html fragmentary information item shown in Fig. 8 includes, as the meta information, a unique ID (ID information) for identifying the html fragmentary information item, positional information indicating a position on a display screen 111 at which the display data included in the html fragmentary information item is displayed, creation time and date information indicating the time and date at which the html fragmentary information item is created, update time and date information indicating the latest time and date at which the contents of the html fragmentary information item is updated, user information indicating a user who is the owner of the html fragmentary information item, access right information that is set for each user using the information terminal devices 20 (the moderator terminal devices 201 and the user terminal devices 202) and that indicates the access right to the html fragmentary information item (i.e., whether generation, modification, and the like of information included in the html fragmentary item are permitted or not), a hash value for determining the sameness of contents of the html fragmentary information item, access model information indicating the terminal devices (the slave display devices 10b and 10c and the information terminal devices 20) that can subscribe to the html fragmentary information item, and creator information. In addition to the above described information, each html fragmentary information item may also include, as the meta information, expiration date information indicating the expiration data of information included in the html fragmentary information item, and the like.

In this manner, each html fragmentary information item constituting a part of the structured display information is an html file with extended meta information; the html fragmentary information item includes display data in any format that can be represented in a version of html (Hyper Text Markup Language) suitable for communication based on XMPP (text data, image data, audio data, video data, etc.) and may also include, in addition to the display data, meta information which is information associated with the display data (attribute information). Here, it is to be noted that the term "extended" as used herein means that the above described attribute information associated with messaging based on XMPP (the ID (ID information), the positional information, the creation time and date information, the user information, the access right information, the hash value, the access model information, etc.) is used as the meta information of the html fragmentary information item.

Here, the positional information indicates a display position on the display screen 111 of the display unit 11 in each display device 10, in which the display data included in the html fragmentary information item is displayed with the display data placed within its corresponding information display frame. Although the display position may be specified by absolute coordinates in the information display frame for the parent html fragmentary information item, the display data may also be placed and displayed in the information display frame for the parent html fragmentary information item according to the document flow of the parent html fragmentary information item. For example, the display position may be determined such that if the html fragmentary information item is written surrounded by <div> tags, the display position is specified by absolute coordinates in the information display frame for the parent html fragmentary information item and if the html fragmentary information item is written surrounded by <par> tags, the display data is placed and displayed in the information display frame for the parent html fragmentary information item according to the document flow of the parent html fragmentary information item.

In that case, the display position of the display data included in each html fragmentary information item is indicated by a relative display position with respect to the display position of the display data included in the parent html fragmentary information item (or its corresponding information display frame) displayed on the display screen 111. Therefore, even if the display position of information included in the parent fragmentary information item (or its corresponding information display frame) displayed on the display screen 111 is changed, the display position of the display data included in the html fragmentary information item does not deviate from the display position of the display data included in the parent html fragmentary information item (or its corresponding information display frame). As a result, the user can display the display data included in each html fragmentary information item in an appropriate display position on the display screen 111.

It is to be noted that for any html fragmentary information item which has no parent html fragmentary information item (for example, the html fragmentary information item n0 shown in Fig. 5 described below), the display position on the display screen 111 of the display unit 11 in each display device 10 indicated by the positional information included in its meta information may indicate either absolute coordinates on the display screen 111 or a relative position with respect to positional information for other display data (e.g., wall paper) that is displayed on the display screen 111.

Next, the access right information indicates the access right to the html fragmentary information item (i.e., whether generation, modification, and the like of information included in the html fragmentary information item are permitted or not), which is set for each user using the information terminal devices 20 (the moderator terminal devices 201 and the user terminal devices 202), and only users who have been granted the access right to the html fragmentary information item can access the html fragmentary information item (generation, modification, and the like of the information included in the html fragmentary information item are permitted). Users who have been granted the access right on the basis of the access right information can access the html fragmentary information item and view the display data and meta information included in the html fragmentary information item, and can modify and correct the contents thereof, for example.

It is to be noted that the access right to a parent html fragmentary information item is also applicable to its child html fragmentary information items as well. Specifically, any user who has been granted no access right on the basis of the access right information of a parent html fragmentary information item has no access right to its child html fragmentary information items either. In contrast, any user who has been given the access right on the basis of the access right information of a parent html fragmentary information item also has the access right to its child html fragmentary information items as well. Here, any user specified as the owner in the user information included in the meta information of an html fragmentary information item may also be authorized to generate a child html fragmentary information item of that html fragmentary information item and modify and delete the contents of the child html fragmentary information item.

The access model information will now be described in detail. The terminal devices (the slave display devices 10b and 10c and the information terminal devices 20) that can subscribe to an html fragmentary information item are only those terminal devices that are authorized to subscribe to the html fragmentary information item on the basis of the access model information, i.e., those terminal devices that are authorized to set the master display device in advance to send, when the html fragmentary information item is modified, a notice reporting that the html fragmentary information item is modified. In the access model information, several alternatives may be set, such as "whitelist", which means that only terminal devices listed in a previously specified list (a white list) are permitted to subscribe, "authorize", which mean that the owner of the html fragmentary information item determines whether to accept or reject a request from a terminal device to subscribe to the html fragmentary information item, and "open", which means that all the terminal devices are permitted to subscribe.

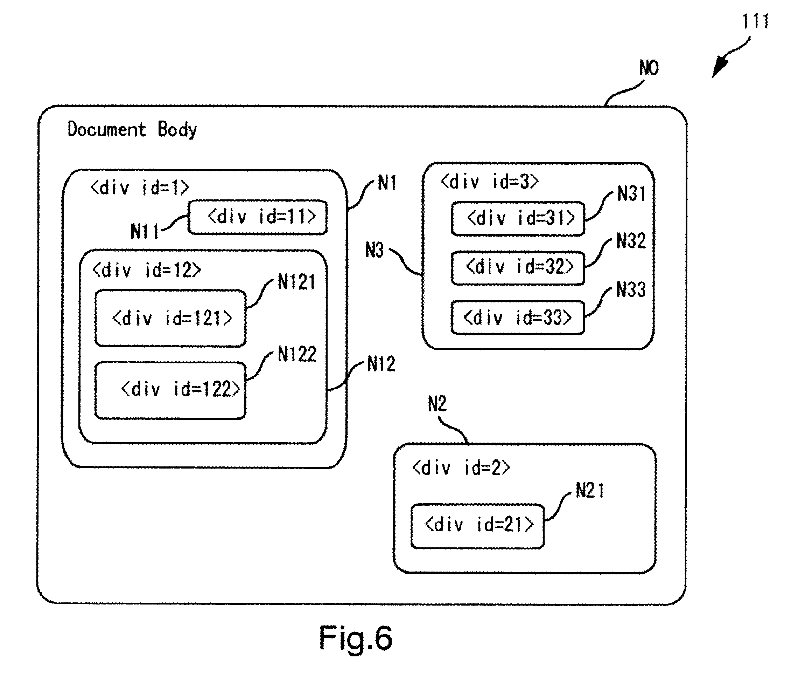

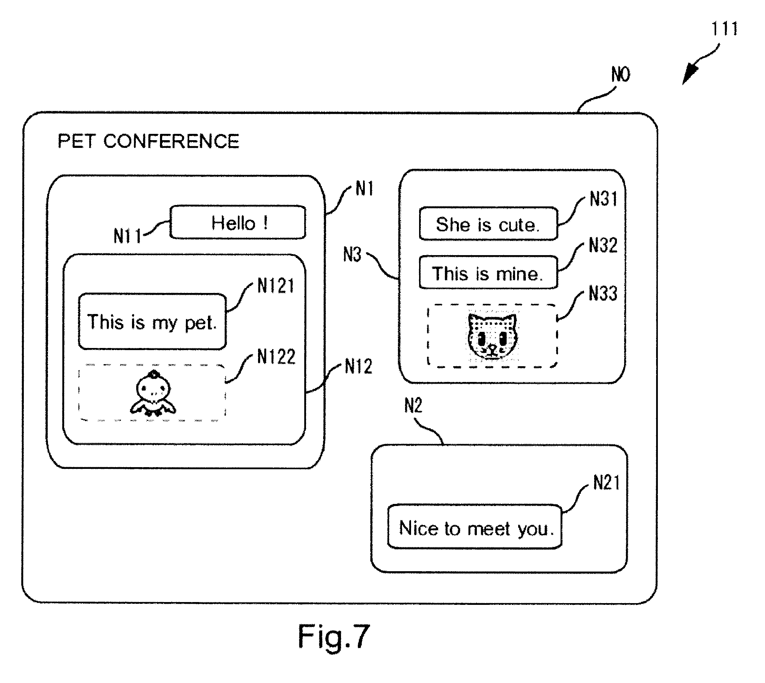

A display screen that is displayed on the display unit in each display device on the basis of structured display information in which a plurality of html fragmentary information items are structured will now be described. Fig. 6 is a diagram for describing a display screen based on structured display information according to an embodiment of the invention. In addition, Fig. 7 is a diagram showing an example of an actual display screen based on structured display information according to an embodiment of the invention. As shown in Figs. 6 and 7, each html fragmentary information item corresponds to a respective information display frame on the display screen 111 of each display unit 11. Therefore, display data (e.g., text data, image data, video data, and audio data) included in each html fragmentary information item is displayed in its corresponding information display frame.

For example, in the display screen 111, display data included in an html fragmentary information item n0 is displayed in an information display frame N0. Here, it is to be noted that any html fragmentary information item that has no parent html fragmentary information item, such as the html fragmentary information item n0, will be hereinafter referred to as a root html fragmentary information item. Display data included in html fragmentary information items n1, n2, and n3, which are the html fragmentary information items placed one level below the html fragmentary information item n0 (i.e., the child html fragmentary information items), are then displayed in information display frames N1, N2, and N3 placed in the information display frame N0, respectively. Furthermore, display data included in html fragmentary information items n11 and n12, which are the child html fragmentary information items of the html fragmentary information item n1, are respectively displayed in information display frames N11 and N12 placed in the information display frame N1, display data included in an html fragmentary information item n21, which is the child html fragmentary information item of the html fragmentary information item n2, is displayed in an information display frame N21 placed in the information display frame N2, and display data included in html fragmentary information items n31, n32, and n33, which are the child html fragmentary information items of the html fragmentary information item n3, are respectively displayed in information display frames N31, N32, and N33 placed in the information display frame N3. In addition, display data included in html fragmentary information items n121 and n122, which are the child html fragmentary information items of the html fragmentary information item n12, are displayed in information display frames N121 and N122 placed in the information display frame N12, respectively. In this manner, in the display screen 111 of each display unit 11 based on the structured display information, display data included in any child html fragmentary information item is displayed in an information display frame placed in the information display frame for the parent html fragmentary information item.

By sending such structured display information (or the html fragmentary information items constituting the structured display information) in real time between the master display device 10a and the slave display devices 10b and 10c, the display screens of the display units 11 in the display devices 10 (the master display device 10a and the slave display devices 10b and 10c) can be synchronized.

Furthermore, when display data included in an html fragmentary information item constituting a part of the structured display information is modified, the control unit 14a in the master display device 10a edits the structured display information on the basis of the contents of the modification. Then, a notice reporting that the structured display information has been modified is sent from the pubsub section 16 in the master display device 10a to the slave display devices 10b and 10c. In addition, at that time, together with the notice, the content-modified html fragmentary information item may also be sent from the master display device 10a to the slave display devices 10b and 10c as needed such that the control units 14b and 14c in the slave display devices 10b and 10c each edit the structured display information on the basis of the received html fragmentary information item. In this manner, by sending the modified html fragmentary information item in real time between the master display device 10a and the slave display devices 10b and 10c, the display screens of the display units 11 in the display devices 10 (the master display device 10a and the slave display devices 10b and 10c) can be synchronized.

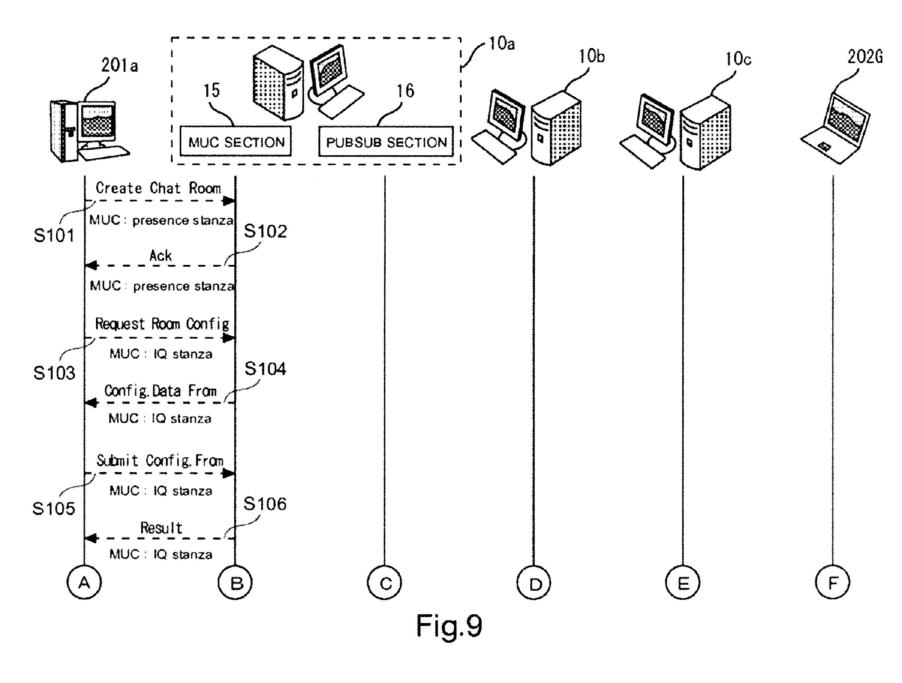

The specific operation of the multi-site electronic conference system 1 according to the embodiment will now be described. First, the master display device 10a uses the MUC section 15 to establish a virtual conference room using the MUC function (the multi-site electronic conference system 1) with an information terminal device 20 at a certain site. Fig. 9 is a sequence diagram for describing a procedure by which the master display device establishes a virtual conference room in the multi-site electronic conference system according to the embodiment. Here, a procedure by which the master display device 10a establishes a virtual conference room using the MUC function (the multi-site electronic conference system 1) with the moderator terminal device 201a at the site A will be described.

At Step S101, the moderator terminal device 201a in the electronic conference system 2a at the site A sends the master display device 10a a request to establish a virtual conference room using the MUC function.

At Step S102, the master display device 10a sends back a confirmation of receipt of the request from the moderator terminal device 201 a.

Then, at Step S103, the moderator terminal device 20 1 a sends the master display device 10a a message reporting that the moderator terminal device 201a intends to generate setting information for establishing a chatting room.

At Step S104, the master display device 10a sends the moderator terminal device 201a data form information for generating the setting information.

At Step S105, the moderator terminal device 201a generates the setting information for establishing the chatting room on the basis of the data form information received from the master display device 10a, and sends the generated setting information to the master display device 10a.

At Step S106, the master display device 10a sends back a message confirming the receipt of the setting information to the moderator terminal device 201a.

By completing the above described steps, a virtual conference room using MUC (the multi-site electronic conference system 1), i.e., a virtual conference room in which the information terminal devices 20 in the electronic conference systems 2 at all the sites (i.e., the moderator terminal devices 201 and the user terminal devices 202 at all the sites) can participate, has been established between the master display device 10a and the moderator terminal device 201a at the site A.

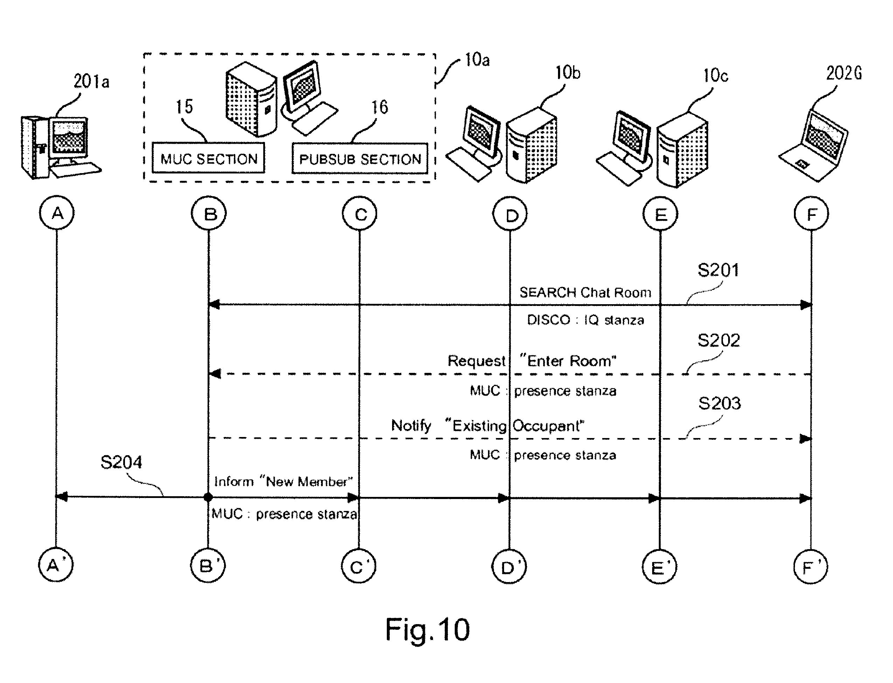

A procedure by which an information terminal device 20 participates in the established virtual conference room (the multi-site electronic conference system 1) will now be described. Fig. 10 is a sequence diagram for describing a procedure by which an information terminal device participates in a multi-site electronic conference system according to an embodiment of the invention. Here, as an example, a procedure by which the information terminal device 202G having the role of user terminal device in the electronic conference system 2a at the site A participates in the virtual conference room (i.e., the multi-site electronic conference system 1) will be described. It is to be noted that the information terminal device 202G will be hereinafter referred to as a user terminal device G.

At Step S201, the user terminal device G (202G) searches the virtual conference room (the multi-site electronic conference system 1) established by the master display device 10a on the basis of the protocol defined in DISCO (XEP-0030 (Service Discovery) of XMPP). As a result, the user terminal device G (202G) discovers the virtual conference room (the multi-site electronic conference system 1) established by the master display device 10a.

At Step S202, the user terminal device G (202G) sends the master display device 10a a message reporting that the user terminal device G (202G) desires to participate in the virtual conference room (the multi-site electronic conference system 1).

At Step S203, the master display device l0a sends the user terminal device G (202G) a message reporting that the participation has been approved.

Then, at Step S204, the master display device 10a sends a message reporting about the new participant to the pubsub section 16 and the other terminal devices that have already participated in the virtual conference room (the multi-site electronic conference system 1) (the slave display devices 10b and 10c, and the information terminal devices 20a, 20b, and 20c at all the sites other than the user terminal device G (202G)).

By completing the above Steps S201-S204, the user terminal device G (202G) can participate in the virtual conference room (the multi-site electronic conference system 1) on the basis of the communication using XMPP, and a message reporting that the user terminal device G (202G) has participated in the virtual conference room (the multi-site electronic conference system 1) is sent to the information terminal devices 20a, 20b, and 20c at all the sites other than the user terminal device G (202G).

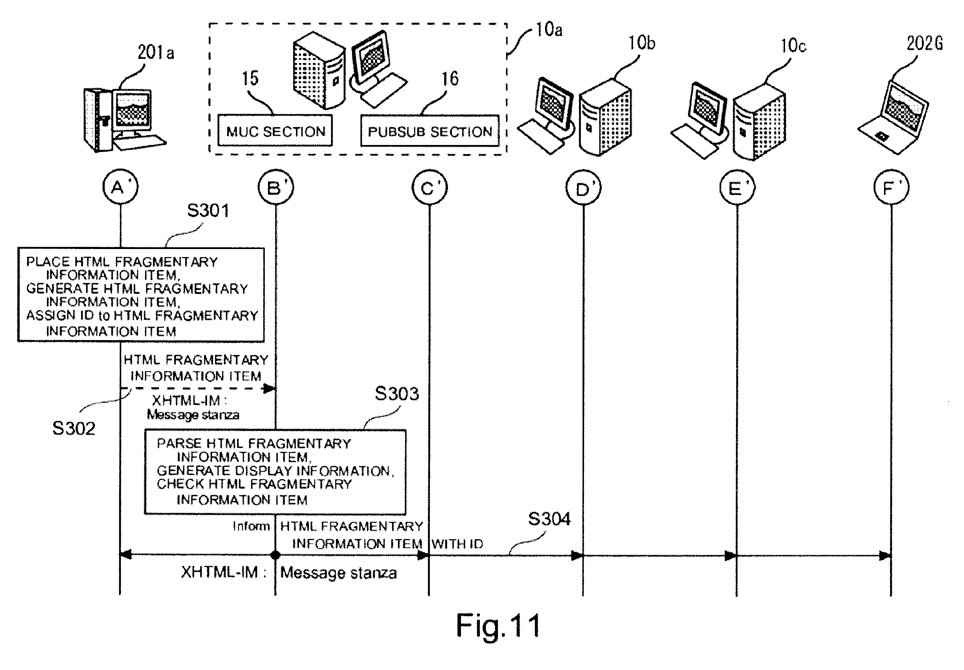

A procedure by which the terminal devices that have participated in the virtual conference room (the multi-site electronic conference system 1) share structured display information will now be described. Fig. 11 is a sequence diagram for describing a procedure by which the terminal devices in the multi-site electronic conference system according to the embodiment share structured display information.

At Step S301, the moderator terminal device 201a, which has established the virtual conference room (the multi-site electronic conference system 1) with the master display device 10a in the above described Steps S101-S106, generates structured display information for causing the display units 11 in the display devices 10 to display the agenda and proceedings and the like in the multi-site electronic conference system 1. It is to be noted that as described above, the structured display information generated at this stage includes html fragmentary information items having a structural correlation with one another (e.g., a tree structure).

The moderator terminal device 201 a assigns each html fragmentary information item a unique ID (ID information) (i.e., an ID (ID information) for identifying the html fragmentary information item). In addition to the ID, the moderator terminal device 201a generates, for each html fragmentary information item and as meta information, the above described attribute information, i.e., the positional information indicating a display position on the display screen 111 at which the display data included in the html fragmentary information item is displayed, the creation time and date information indicating the time and date at which the html fragmentary information item is created, the update time and date information indicating the latest time and date at which the contents of the html fragmentary information item is updated, the user information indicating the user who is the owner of the html fragmentary information item, the access right information that is set for each user using the information terminal devices 20 (the moderator terminal device 201a and the user terminal device 202a) in the electronic conference system 2a at the site A and that indicates the access right to the html fragmentary information item (i.e., whether generation, modification, and the like of information included in the html fragmentary information item are permitted or not), the hash value for determining the sameness of contents of the html fragmentary information item, the access model information indicating the terminal devices (the slave display devices 10b and 10c and the information terminal devices 20) that can subscribe to the html fragmentary information item, the creator information, and the like. In addition to the above described information, the moderator terminal device 201 a may also generate, as the meta information, expiration date information indicating the expiration date of information included in the html fragmentary information item, and the like.

At Step S302, the moderator terminal device 201a sends the generated html fragmentary information items to the master display device 10a.

At Step S303, the master display device 10a parses the received html fragmentary information items and generates html fragmentary information items corresponding to the received fragmentary information items. The master display device 10a also confirms that IDs (ID information) for identifying the generated html fragmentary information items do not duplicate IDs (ID information) for other html fragmentary information items. Then, the master display device 10a generates structured display information, having a structured configuration, including the html fragmentary information items.

Next, at Step S304, the master display device 10a sends the generated structured display information in which the html fragmentary information items are structured to the other terminal devices (i.e., the slave display devices 10b and 10c, and the moderator terminal devices 201 and the user terminal devices 202 in the electronic conference systems 2 at all the sites).

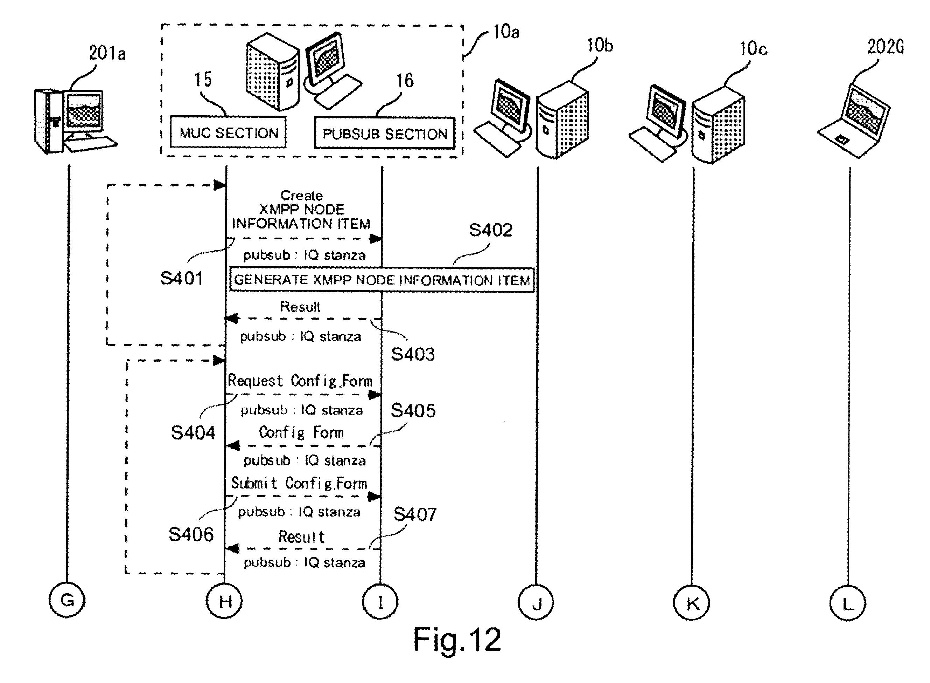

A procedure by which the master display device 10a prepares for synchronization with the slave display devices 10b and 10c using the pubsub function will now be described. Fig. 12 is a sequence diagram for describing a procedure by which the master display device prepares for synchronization with the slave display devices in the multi-site electronic conference system according to an embodiment of the invention.

At Step 401, the MUC section 15 in the master display device 10a sends the pubsub section 16 a request to generate XMPP node information items corresponding to the html fragmentary information items constituting the structured display information stored in the master display device 10a.

At Step 402, the pubsub section 16 in the master display device 10a generates the XMPP node information items corresponding to the html fragmentary information items constituting the structured display information. It is to be noted that these XMPP node information items are html files generated such that the corresponding html fragmentary information items can be sent from the communication unit 12a. Furthermore, it is to be noted that these XMPP node information items are generated in a volatile memory (not shown), the storage unit 13b, or the like included in the master display device 10a, for example.

At that time, these XMPP node information items are assigned unique IDs (ID information), and it is to be noted that it is preferable that the IDs (ID information) for identifying the XMPP node information items be the same as the IDs (ID information) for the corresponding html fragmentary information items. In this manner, it is possible to use these IDs (ID information) to identify the html fragmentary information items constituting the structured display information and their corresponding XMPP node information items with no duplication. As a result, it is possible to use an html fragmentary information item constituting a part of the structured display information and the corresponding XMPP node information item as a unit of information for controlling access right against the users participating in the multi-site electronic conference system 1.

At Step S403, the pubsub section 16 in the master display device 10a sends the MUC section 15 a message reporting that the XMPP node information items has been generated.

By repeating the above described Steps S401-S403 the same number of times as the number of the html fragmentary information items constituting the structured display information having a structured configuration (or the corresponding XMPP node information items), the master display device 10a generates the XMPP node information items corresponding to the html fragmentary information items constituting the structured display information having a structured configuration.

Next, the master display device 10a sets attribute information for each of the generated XMPP node information items. At Step S404, the MUC section 15 in the master display device 10a sends the pubsub section 16 a message reporting that the master display device 10a intends to set attribute information for the XMPP node information items.

At Step S405, the pubsub section 16 in the master display device 10a sends the MUC section 15 data form information for generating the attribute information for the XMPP node information items.

At Step S406, the MUC section 15 in the master display device 10a generates setting information for setting the attribute information for the XMPP node information items generated in the above described Steps S401-S403 on the basis of the data form information received from the pubsub section 16, and sends the generated setting information to the pubsub section 16.

At Step S407, the pubsub section 16 in the master display device 10a sends the MUC section 15 a message confirming the receipt of the setting information.

Then, the pubsub section 16 in the master display device 10a repeats the above described Steps S404-S407 the same number of times as the number of the html fragmentary information items constituting the structured display information (or the corresponding XMPP node information items). In this manner, the attribute information is set for each XMPP node information item.

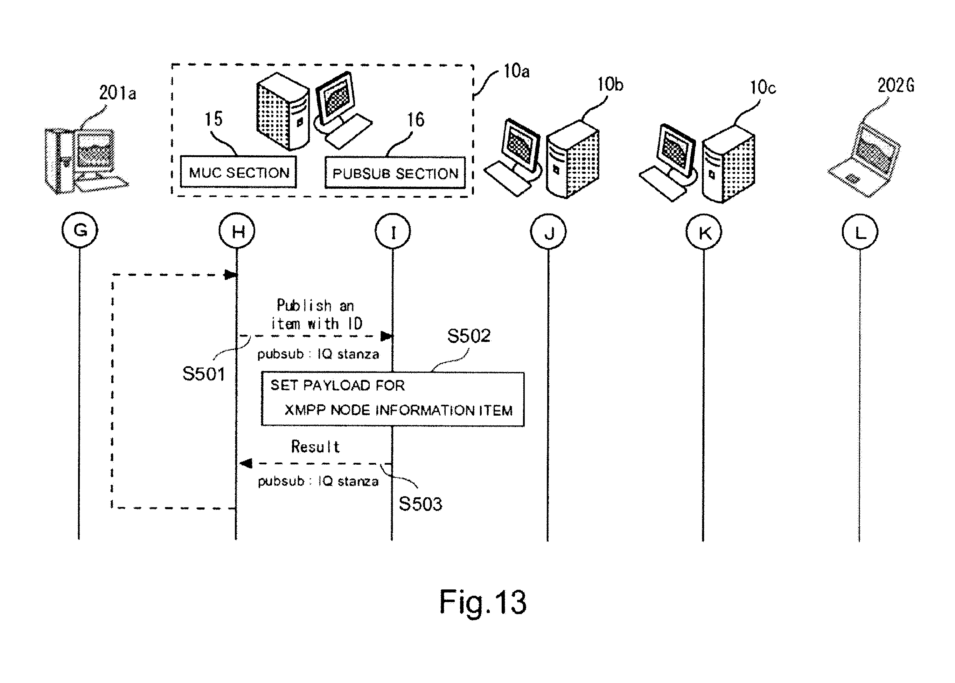

Next, the master display device 10a transfers information included in the html fragmentary information items constituting the structured display information to the corresponding XMPP node information items. Fig. 13 is a sequence diagram for describing a procedure by which the master display device sets a payload for each XMPP node information item in a multi-site electronic conference system according to an embodiment of the invention.

At Step S501, the MUC section 15 in the master display device 10a sends the pubsub section 16 the contents of an html fragmentary information item constituting a part of the structured display information, as a payload, together with an ID for identifying that html fragmentary information item.

At Step S502, the pubsub section 16 in the master display device 10a sets the received payload for the corresponding XMPP node information item.

Then, at Step S503, the pubsub section 16 in the master display device 10a sends the MUC section 15 a message reporting that the payload has been set for the corresponding XMPP node information item.

By repeating the above described Steps S501-S503 the same number of times as the number of the html fragmentary information items constituting the structured display information (or the corresponding XMPP node information items), the master display device 10a transfers information included in the html fragmentary information items constituting the structured display information to the corresponding XMPP node information items. At that time, the XMPP node information items may actually incorporate the information included in the corresponding fragmentary information items. However, it is to be noted that it is preferable that the XMPP node information items be associated with the corresponding html fragmentary information items such that the information included in the corresponding html fragmentary information items is referred to as the information included in the XMPP node information items. In this manner, load on memory capacity in a volatile memory (not shown) or the storage unit 13a in connection with the generation of the XMPP node information items can be reduced.

By completing the above described steps, the display screens displayed on the display unit 11a in the master display device 10a and the display units 11b and 11c in the slave display devices 10 are ready to be synchronized on the basis of the structured display information.

A procedure by which the slave display devices 10b and 10c prepare for synchronization of display screens with the master display device 10a will now be described. It is to be noted that in the present embodiment, the synchronization of the display screens between the master display device 10a and the slave display devices 10b and 10c is performed using the pubsub function, as described above. Here, as an example, a procedure by which the slave display device 10b at the site B achieves the synchronization of the display screens with the master display device 10a will be described.

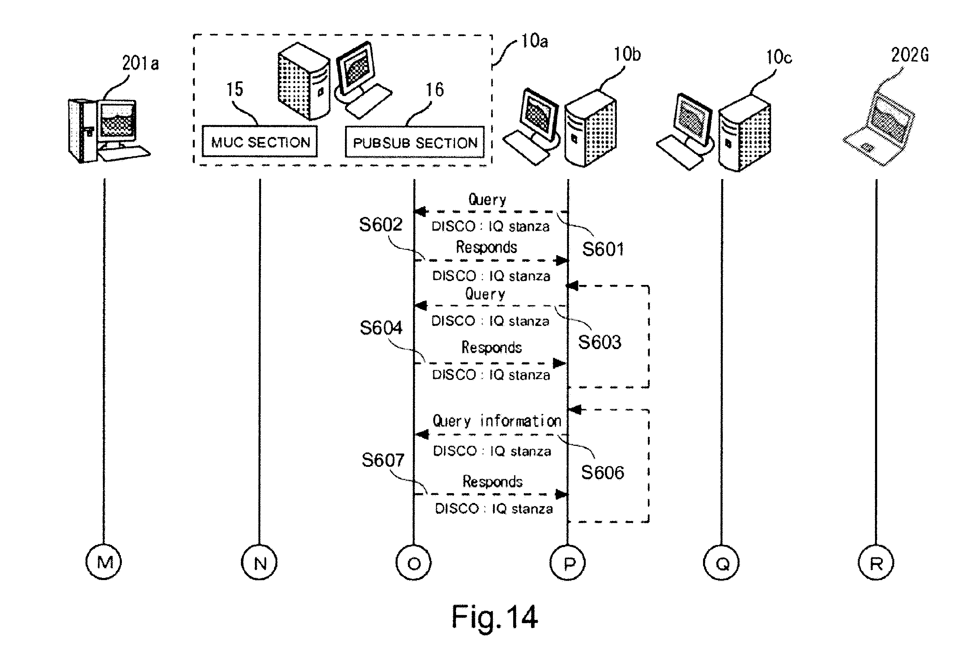

First, the slave display device 10b finds out the structural correlation among the XMPP node information items generated by the pubsub section 16 in the master display device 10a (i.e., the structure of the structured display information constituted by the corresponding html fragmentary information items) and the attribute information included as the meta information in the html fragmentary information items corresponding to the XMPP node information items. Fig. 14 is a sequence diagram for describing a procedure by which the slave display device finds out the structural correlation among the XMPP node information items and the attribute information in a multi-site electronic conference system according to an embodiment of the invention. At this stage, the master display device 10a and the slave display device 10b use DISCO (XEP-0030 (Service Discovery) of XMPP).

At Step S601, the slave display device 10b sends the pubsub section 16 in the master display device 10a a massage reporting that the slave display device 10b intends to retrieve the structural correlation among the XMPP node information items. With regard to the structural correlation among the XMPP node information items, it is to be noted that any XMPP node information item which is placed one level above, and is associated with, a certain XMPP node information item will be referred to as a parent XMPP node information item, and any XMPP node information item which is placed one level below, and is associated with, a certain XMPP node information item will be referred to as a child XMPP node information item. The purpose of Step S601 is to find out an XMPP node information item having no parent XMPP node information item (hereinafter referred to as a root XMPP node information item), as with the html fragmentary information item n0 in Fig. 5, for example.

At Step S602, the pubsub section 16 in the master display device 10a sends the slave display device 10b the result of finding out the root XMPP node information item. In this manner, the slave display device 10b finds out the root XMPP node information item (i.e., the root html fragmentary information item).

Then, the slave display device 10b further retrieves the XMPP node information items stored in the master display device 10a sequentially and finds out the structural correlation among the XMPP node information items. Specifically, at Step S603, the slave display device 10b sends the pubsub section 16 in the master display device 10a a message reporting that the slave display device 10b intends to retrieve the child XMPP node information items of the root XMPP node information item.

At Step S604, the pubsub section 16 in the master display device 10a sends a message reporting that the child XMPP node information items have been found out. In this manner, the slave display device 10b finds out the child XMPP node information items of the root XMPP node information item.

Then, the slave display device 10b repeats the same procedure as that of Steps S603-S604 until the structural correlation among the XMPP node information items (i.e., the structure of the structured display information constituted by the corresponding html fragmentary information items) is fully found out. By completing the above described steps, the slave display device 10b can find out the structural correlation among the XMPP node information items stored in the master display device 10a.

Next, the slave display device 10b sets attribute information for each of the XMPP node information items. At Step S606, the slave display device 10b sends the pubsub section 16 in the master display device 10a a message requesting transmission of setting information for attribute information for an XMPP node information item.

At Step S607, the pubsub section 16 in the master display device 10a sends the slave display device 10b the setting information for the attribute information for the XMPP node information item.

The above described Steps S606-S607 are repeated until the extended attribute information is set for all the XMPP node information items.

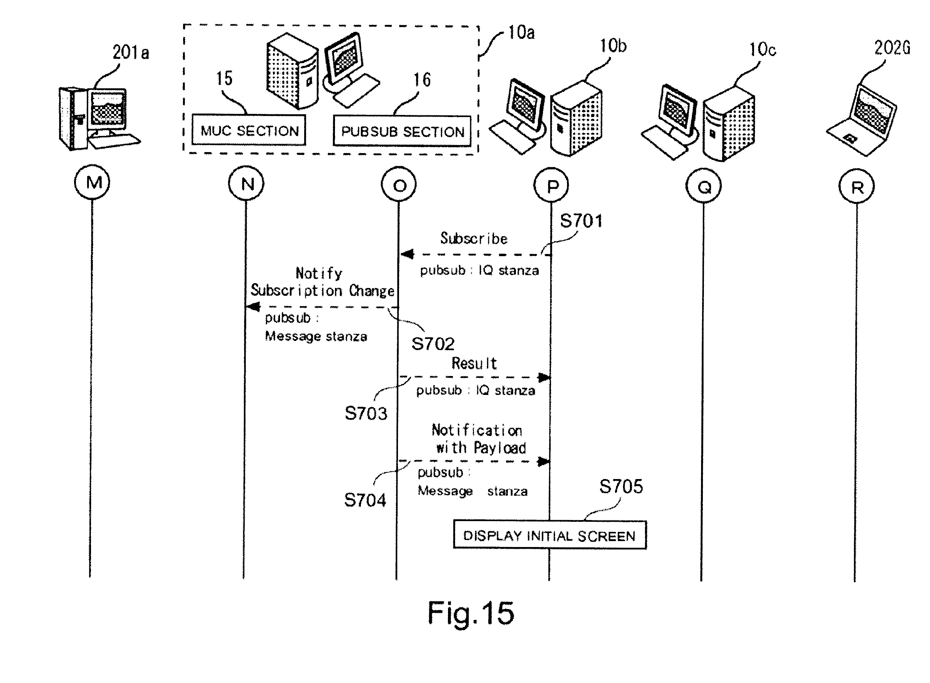

A procedure by which the slave display device 10b subscribes to an XMPP node information item included in the master display device will now be described. Fig. 15 is a sequence diagram for describing a procedure by which the slave display device subscribes to an XMPP node information item in a multi-site electronic conference system according to an embodiment of the invention.

At Step S701, the slave display device 10b sends the pubsub section 16 in the master display device 10a a message reporting that the slave display device 10b intends to subscribe to the XMPP node information items stored in the master display device 10a.

At Step S702, the pubsub section 16 in the master display device 10a sends the MUC section 15 a notice reporting that the slave display device 10b intends to subscribe to the XMPP node information items.

Then, at Step S703, the pubsub section 16 in the master display device 10a sends the slave display device 10b a message confirming the receipt of the notice reporting that the slave display device 10b intends to subscribe to the XMPP node information items.

In the procedure of the above described Steps S701-S703, the slave display device 10b may send the master display device 10a a request to set the master display device 10a to send, when the master display device 10a modifies an html fragmentary information item, a notice from the master display device 10a to the slave display device 10b, and the master display device 10a may accept the setting and set itself accordingly in advance. By employing such a configuration, when an html fragmentary information item constituting a part of structured display information is modified at the master display device 10a, the slave display device 10b can quickly learn that the html fragmentary information item has been modified. As a result, when an html fragmentary information item constituting a part of the structured display information is modified, the slave display device 10b can quickly and reliably perform operations such as requesting the master display device 10a to send the modified html fragmentary information item, and can share the same structured display information with the master display device 10a. Therefore, the master display device 10a and the slave display device 10b can easily synchronize structured display information in which a plurality of html fragmentary information items are structured and can quickly and reliably synchronize their displays based on the structured display information.

Next, at Step S704, the pubsub section 16 in the master display device 10a further sends the slave display device 10b a notice reporting that the XMPP node information items have been generated, together with the payloads for the XMPP node information items.

Then, at Step S705, the slave display device 10b generates the structured display information on the basis of the payloads for the XMPP node information items received from the pubsub section 16 in the master display device 10a and produces a display on the display unit 11b on the basis of the generated structured display information.

By completing the above described steps, the slave display device 10b at the site B can achieve the synchronization of the display screens based on the structured display information having a structured configuration with the master display device 10a. It is to be noted that by following the same procedure, the slave display device 10c at the site C also can achieve the synchronization of the display screens based on the structured display information having a structured configuration with the master display device 10a.

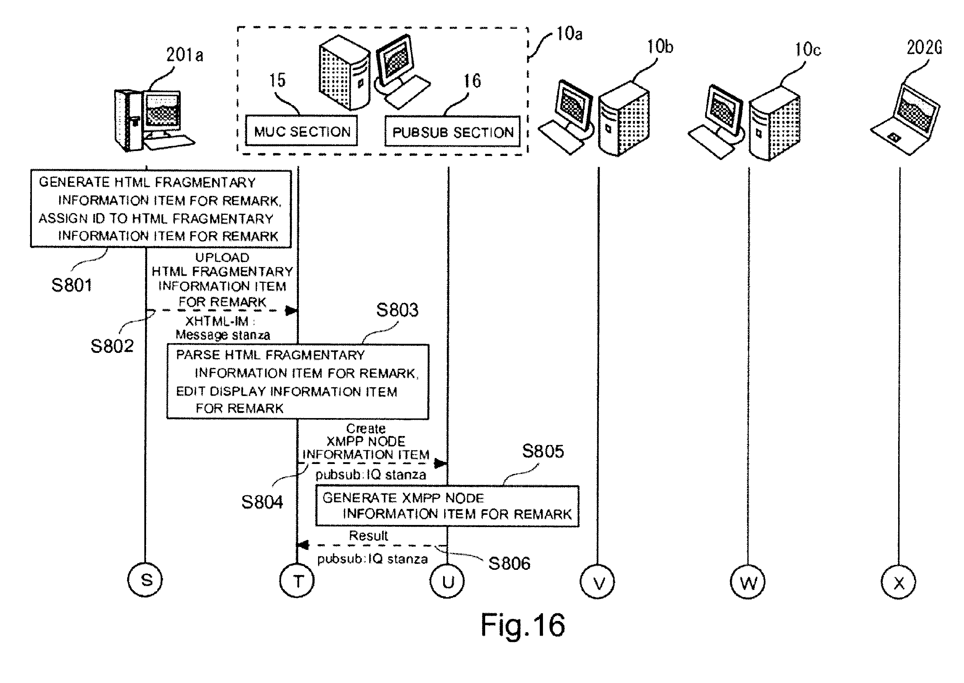

A procedure by which opinions, presentation materials, and the like (display data) presented to the multi-site electronic conference system 1 by the information terminal devices 20 are displayed on the display units 11 in the display devices 10 at all the sites will now be described. Here, as an example, a procedure by which opinions, presentation materials, and the like (display data) presented to the multi-site electronic conference system 1 by the user terminal device G (202G) in the electronic conference system 2a at the site A are displayed on the display units 11 in the display devices 10 at all the sites will be described. Fig. 16 is a sequence diagram for describing a procedure by which information provided by the user terminal device G is displayed on the display units of the display devices in a multi-site electronic conference system according to an embodiment of the invention. It is to be noted that in the following description, it is assumed that the user of the user terminal device G (202G) is firstly permitted to present opinions, presentation materials, and the like (display data) to the multi-site electronic conference system 1, for example, or is directly authorized by the user using the moderator terminal device 201a at the site A to present opinions, presentation materials, and the like (display data) in a manner such as off-line.

At Step S801, the moderator terminal device 201a at the site A generates an html fragmentary information item for containing opinions, presentation materials, and the like (display data) presented to the multi-site electronic conference system 1 by the user terminal device G (202G) (hereinafter referred to as an html fragmentary information item for remark). Here, the generation of the html fragmentary information item for remark means that an information display frame for displaying the information presented to the multi-site electronic conference system 1 by a speaker (the user terminal device G (202G) in this case) on the display units 11 in the display devices 10 is located on the display screen 111.

Furthermore, the moderator terminal device 201a assigns a unique ID (ID information) to the generated html fragmentary information item for remark (i.e., an ID (ID information) for identifying the html fragmentary information item for remark). In addition to the ID, the moderator terminal device 201a generates, as meta information, attribute information such as those described above, i.e., the positional information indicating the display position on the display unit 11 at which display data included in the html fragmentary information item for remark is displayed, the creation time and date information indicating the time and date at which the html fragmentary information item for remark is created, the update time and date information indicating the latest time and date at which the contents of the html fragmentary information item for remark is updated, the user information indicating the user who is the owner of the html fragmentary information item for remark, the access right information that is set for each user using the information terminal devices 20 (the moderator terminal device 201a and the user terminal device 202a) in the electronic conference system 2a at the site A and that indicates the access right to the html fragmentary information item for remark (i.e., whether generation, modification, and the like of the information included in the html fragmentary information item for remark are permitted or not), the hash value for determining the sameness of contents of the html fragmentary information item for remark, the access model information indicating the terminal devices 20 (the slave display devices 10b and 10c and the information terminal devices 20) that can subscribe to the html fragmentary information item for remark, the creator information, and the like. In addition, the moderator terminal device 201a may also generate, as the meta information, expiration date information indicating the expiration date of information included in the html fragmentary information item for remark, and the like. Then, the moderator terminal device 201a edits the structured display information having a structured configuration such that the html fragmentary information item for remark including the meta information is incorporated.

At Step S802, the moderator terminal device 201a sends the MUC section 15 in the master display device 10a the html fragmentary information item for remark including the meta information.

At Step S803, the MUC section 15 in the master display device 10a parses the received html fragmentary information item for remark and generates an html fragmentary information item corresponding to the received html fragmentary information item for remark. The master display device 10a also confirms that the ID (ID information) for identifying the generated html fragmentary information item does not duplicate IDs (ID information) for other html fragmentary information items. Then, the master display device 10a edits the structured display information having a structured configuration such that the generated html fragmentary information item is incorporated.

At Step S804, the MUC section 15 in the master display device 10a sends the pubsub section 16 a request to generate an XMPP node information item corresponding to the html fragmentary information item for remark (hereinafter referred to as an XMPP node information item for remark) based on the edited structured display information.

At Step S805, the pubsub section 16 in the master display device 10a generates the XMPP node information item for remark corresponding to the html fragmentary information item for remark. It is to be noted that this XMPP node information item for remark is an html file generated such that the corresponding html fragmentary information item for remark can be sent from the communication unit 12a. Furthermore, it is also to be noted that this XMPP node information item for remark is, for example, generated in a volatile memory (not shown), the storage unit 13a, or the like in the master display device 10a.

Then, at Step S806, the pubsub section 16 in the master display device 10a sends the MUC section 15 a message reporting that the XMPP node information item for remark has been generated.

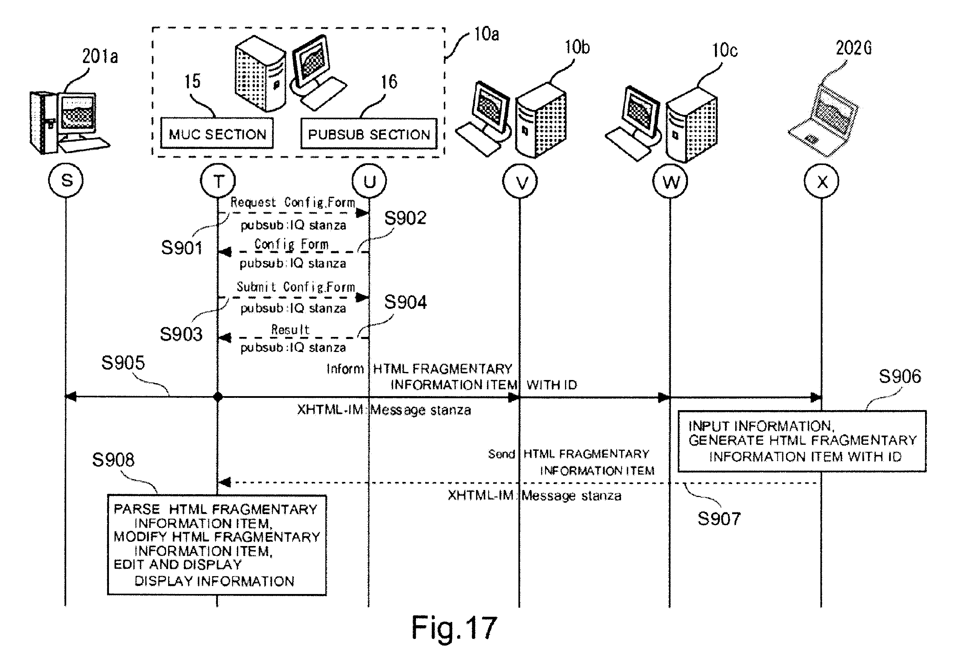

A procedure by which the MUC section 15 in the master display device 10a sets attribute information for the XMPP node information item for remark generated by the pubsub section 16 and a procedure by which display data presented to the multi-site electronic conference system 1 is displayed will now be described. Fig. 17 is a sequence diagram for describing a procedure by which attribute information is set for the XMPP node information item for remark and a procedure by which presented information is displayed in a multi-site electronic conference system according to an embodiment of the invention.

At Step S901, the MUC section 15 in the master display device 10a sends the pubsub section 16 a message reporting that the master display device 10a intends to set attribute information for the XMPP node information item for remark.

At Step S902, the pubsub section 16 in the master display device 10a sends the MUC section 15 data form information for setting the attribute information for the XMPP node information item for remark.

At Step S903, the MUC section 15 in the master display device 10a generates the attribute information for the XMPP node information items for remark on the basis of the data form information received from the pubsub section 16, and sends the generated setting information to the pubsub section 16.

At Step S904, the pubsub section 16 in the master display device 10a sends a message confirming the receipt of the setting information to the MUC section 15.

By completing the above described Steps S901-S904, the master display device 10a has set the attribute information (the ID (ID information), the positional information, the creation time and date information, the user information, the access right information, the hash value, the access model information, and the like) for the XMPP node information item corresponding to an information display frame that enables the speaker to speak. If the hash value is particularly set as the attribute information for the XMPP node information item, the sameness of contents of the fragmentary information item sent from the master display device to the slave display device can be checked through the hash value. As a result, the master display device and the slave display device can easily synchronize structured display information in which a plurality of fragmentary information items are structured and can quickly and reliably synchronize their displays based on the structured display information. Furthermore, if the update time and date information is set as the attribute information for the XMPP node information item, the accurate time and date at which the XMPP node information item is updated can be learned. As a result, because the sameness of contents of the fragmentary information item sent from the master display device to the slave display device can be checked through the hash value, the master display device and the slave display device can reliably synchronize structured display information in which a plurality of fragmentary information items are structured and can reliably synchronize their displays based on the structured display information.

Next, at Step S905, the MUC section 15 in the master display device 10a sends the terminal devices at all the sites (the slave display devices 10b and 10c and the information terminal devices 20 (the moderator terminal devices 201 and the user terminals devices 202)) a message reporting that an information display frame in which the information presented by the speaker (the user terminal device G (202G) in this case) is displayed has been placed on the display screen 111, together with the html fragmentary information item for remark. The terminal devices at all the sites edit the structured display information stored in the terminal devices on the basis of the received html fragmentary information item for remark.

At Step S906, display data to be presented to the virtual conference room (the multi-site electronic conference system 1) is input to the user terminal device G (202G) through the terminal input unit 25. The user terminal device G (202G) edits the html fragmentary information item for remark such that the input display data is incorporated. It is to be noted that the ID (ID information) for identifying the html fragmentary information item for remark in which the input display data is stored is the same as the ID (ID information) for the html fragmentary information item for remark generated at Step S801 and the html fragmentary information item generated at Step S803. Furthermore, as the display data to be input to the user terminal device G (202G), data in any format that can be represented in a version of html suitable for communication based on XMPP can be used, such as text data, image data, audio data, video data, and the like, and there is no limit to the combination of such data items.

At Step S907, the html fragmentary information item edited at Step S906 is sent to the MUC section 15 in the master display device 10a.

At Step S908, the MUC section 15 in the master display device 10a parses the html fragmentary information item for remark received from the user terminal device G (202G), and checks for the user information and the access right information included in the meta information of the html fragmentary information item for remark containing the display data that is input at Step S906. If the user information is consistent with the access right information, the structural display information stored in the master display device 10a is edited on the basis of the received html fragmentary information item for remark. Specifically, in order to incorporate the display data that is input at Step S906, the contents of the html fragmentary information item, which corresponds to the html fragmentary information item for remark, included in the structural display information stored in the master display device 10a is modified. Then, the display data that is input into the user terminal device G (202G) is displayed on the display unit 11a on the basis of the edited structured display information.

By completing the above described procedure, the information (e.g., utterances) presented to the virtual conference room by the user terminal device G (202G) is displayed on the display unit 11a in the master display device 10a.

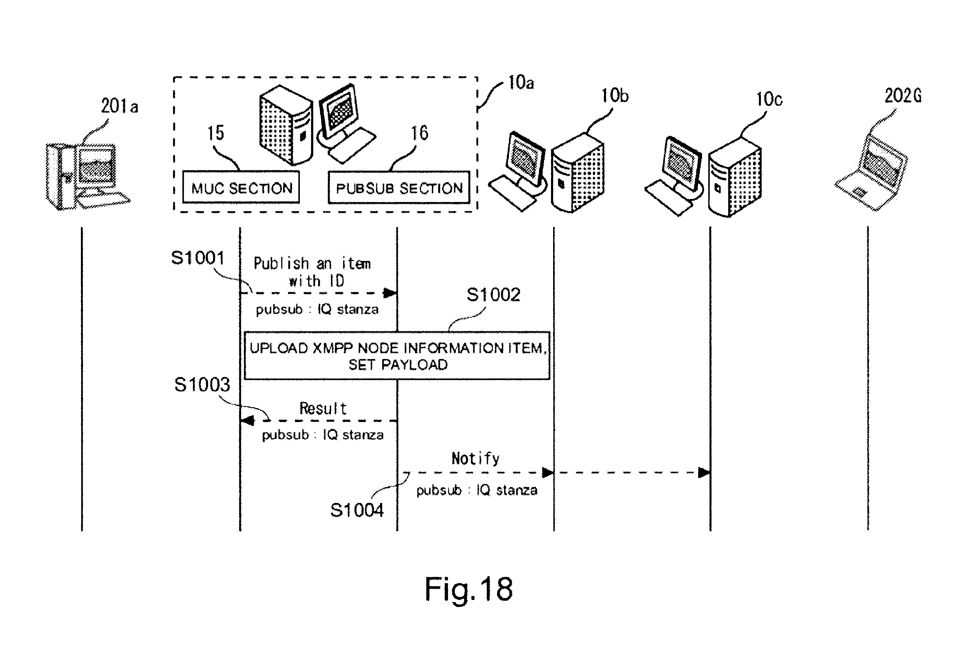

A procedure by which the display screen of the master display device 10a and the display screens of the slave display devices 10b and 10c are synchronized to produce the same display will now be described. Fig. 18 is a sequence diagram for describing a procedure by which the display screen of the master display device and the display screens of the slave display devices are synchronized in a multi-site electronic conference system according to an embodiment of the invention.

At Step S1001, the MUC section 15 in the master display device 10a sends the pubsub section 16 the html fragmentary information item modified at Step S908 in Fig. 17, together with an ID (ID information) for identifying that html fragmentary information item.

At Step S1002, the pubsub section 16 in the master display device 10a finds out the XMPP node information item corresponding to the received html fragmentary information item on the basis of the received ID (ID information) and updates the found XMPP node information item on the basis of the received html fragmentary information item. Specifically, the contents of the received html fragmentary information item are transferred to the found XMPP node information item. At that time, the XMPP node information item may actually incorporate the information included in the corresponding html fragmentary information item. However, it is to be noted that it is preferable that the XMPP node information items be associated with the corresponding html fragmentary information items such that the information included in the corresponding html fragmentary information item is referred to as the information included in the XMPP node information item. In this manner, load on memory capacity in a volatile memory (not shown) or the storage unit 13a in connection with the generation of the XMPP node information items can be reduced.

Furthermore, the pubsub section 16 in the master display device 10a sets the contents of the updated XMPP node information item (i.e., the information included in the corresponding html fragmentary information item) as a payload to be sent to the slave display devices 10b and 10c.

At Step S1003, the pubsub section 16 in the master display device 10a sends the MUC section 15 a message reporting that the payload has been set.

Then, at Step S1004, the pubsub section 16 in the master display device 10a sends the slave display devices 10b and 10c a notice reporting that the html fragmentary information item constituting a part of the structured display information has been modified, and an ID (ID information) for identifying the modified html fragmentary information item (i.e., the html fragmentary information item generated at Step S908 in Fig. 17).

In this manner, upon modifying an html fragmentary information item constituting a part of structured display information (or the corresponding XMPP node information item), the master display device 10a sends the slave display devices 10b and 10c a notice reporting that the html fragmentary information item constituting a part of the structured display information (or the corresponding XMPP node information item) has been modified and ID information for identifying the modified html fragmentary information item (or the corresponding XMPP node information item). As a result, when an html fragmentary information item constituting a part of the structured display information (or the corresponding XMPP node information item) is modified, the slave display devices 10b and 10c can quickly learn that the html fragmentary information item (or the corresponding XMPP node information item) has been modified without inquiring the master display device 10a whether any html fragmentary information item constituting a part of the structured display information (or the corresponding XMPP node information item) has been modified or not, and can recognize which html fragmentary information item (or the corresponding XMPP node information item) has been modified through the ID information. Therefore, when an html fragmentary information item constituting a part of structured display information (or the corresponding XMPP node information item) is modified, the slave display devices 10b and 10c can quickly and reliably perform operations such as requesting the master display device 10a to send the modified html fragmentary information item (or the corresponding XMPP node information item) and can share the same structured display information with the master display device. As a result, the master display device 10a and the slave display devices 10b and 10c can easily synchronize structured display information in which a plurality of html fragmentary information items are structured and can quickly and reliably synchronize their displays based on the structured display information.

Furthermore, because the master display device 10a and the slave display devices 10b and 10c perform communication based on XMPP (Extensible Messaging and Presence Protocol), real time messaging (information exchange) can be achieved between the master display device 10a and the slave display devices 10b and 10c, and information messaged on the basis of XMPP and information displayed on the display unit 11 a included in the master display device10a and the display units 11b and 11c included in the slave display devices 10b and 10c can be easily and reliably associated with each other through the ID information.

In addition, at Step S1004, the pubsub section 16 in the master display device 10a may also send the slave display devices 10b and 10c the payload set at Step S1002, together with the notice reporting that the html fragmentary information item constituting a part of the structured display information (or the corresponding XMPP node information item) has been modified. Then, the slave display devices 10b and 10c may also edit the structured display information on the basis of the payload received from the pubsub section 16 in the master display device 10a and produce displays based on the edited structured display information on the display units 11b and 11c. In this manner, when an html fragmentary information item constituting a part of structured display information (or the corresponding XMPP node information item) is modified, the slave display devices 10b and 10c can quickly and reliably edit the structured display information and produce the same display as the master display device 10a. As a result, the master display device 10a and the slave display devices 10b and 10c can easily synchronize structured display information in which a plurality of html fragmentary information items (or the corresponding XMPP node information items) are structured and can quickly and reliably synchronize their displays based on the structured display information.

By completing the above described procedure, the display screen of the master display device 10a and the display screens of the slave display devices 10b and 10c can be synchronized to produce the same display.

Although the present invention has been described on the basis of embodiments thereof, it is to be noted that the invention is not limited to the above described embodiments and modifications can be made to the configuration within the scope and spirit of the invention. For example, according to the above described embodiments, in the multi-site electronic conference system 1, XEP-0045 (Multi-User Chat) of XMPP is used to exchange information and XEP-0060 (XHTML-IM) of XMPP is used to transmit and receive information, thereby transmitting and receiving html fragments (which are referred to as html fragmentary information items in the invention) in a similar manner to that of ordinary xhtml/xtml (web) systems. However, the multi-site communication system according to the invention is not limited to the above embodiments, and the display devices 10, the moderator terminal devices 201, and the user terminal devices 202 in the electronic conference systems 2 at all the sites may also be connected via a separate XMPP communication server.

Furthermore, although according to the above described embodiments, a plurality of terminal devices including the display devices 10 and one or more information terminal devices 20 are configured to perform communication based on XMPP, the invention is not limited thereto. Communication based on a protocol similar to XMPP may also be performed.

Furthermore, according to the above described embodiments, XMPP node information items are assigned IDs (ID information) that are the same as IDs (ID information) assigned to the corresponding html fragmentary information items constituting structured display information, for example. However, with regard to the IDs (ID information) for the html fragmentary information items and the IDs (ID information) for the XMPP node information items, a conversion table may also be used to convert the former into the latter and vice versa as long as there is no duplication and each of the former uniquely correspond to a respective one of the latter. Then, the MUC function and the pubsub function may also be distributed. Specifically, the MUC function and the pubsub function may be included in the slave display devices 10.

Furthermore, those skilled in the art will understand that the above described embodiments are merely exemplary and other variations in the combination of the components and the processing steps are possible and are within the scope of the present invention.

In order to achieve the above described object, a communication method according to the invention may be a communication method in a communication system in which a master display device and a slave display device share structured display information in which a plurality of fragmentary information items each including display data are structured through communication via a network and the master display device and the slave display device produce the same display on the basis of the structured display information, wherein the master display device may, upon modifying the fragmentary information item constituting a part of the structured display information, send the slave display device a notice reporting that the fragmentary information item is modified and ID information for identifying the modified fragmentary information item.

According to the communication method configured as described above, the master display device, upon modifying a fragmentary information item constituting a part of structured display information, sends the slave display device a notice reporting that the fragmentary information item constituting a part of the structured display information is modified and ID information for identifying the modified fragmentary information item. As a result, when a fragmentary information item constituting a part of the structured display information is modified, the slave display device can quickly learn that the fragmentary information item has been modified without inquiring the master display device whether any fragmentary information item constituting a part of the structured display information has been modified or not, and can recognize which fragmentary information item has been modified through the ID information. Therefore, when a fragmentary information item constituting a part of the structured display information is modified, the slave display device can quickly and reliably perform operations such as requesting the master display device to send the modified fragmentary information item and can share the same structured display information with the master display device in a synchronized manner. As a result, the master display device and the slave display device can easily synchronize structured display information in which a plurality of fragmentary information items are structured and can quickly and reliably synchronize their displays based on the structured display information.

In the communication method configured as described above, the fragmentary information item may also include the ID information, and the master display device may also send the modified fragmentary information item to the slave display device.

Furthermore, the slave display device may also edit the structured display information on the basis of the received fragmentary information item and produce a display based on the edited structured display information.

By employing such a configuration, when a fragmentary information item constituting a part of the structured display information is modified, the slave display device can quickly and reliably edit the structured display information and produce the same display as the master display device. As a result, the master display device and the slave display device can easily synchronize structured display information in which a plurality of fragmentary information items are structured and can quickly and reliably synchronize their displays based on the structured display information.

Furthermore, in the above described configuration, the fragmentary information item may also include a hash value for determining the sameness of contents of the fragmentary information item. By employing such a configuration, because the sameness of contents of a fragmentary information item sent from the master display device to the slave display devices can be determined through the hash value, the master display device and the slave display device can reliably synchronize structured display information in which a plurality of fragmentary information items are structured and can reliably synchronize their displays based on the structured display information.

Furthermore, in the above described configuration, the fragmentary information item may also include update time and date information indicating the latest time and date at which the fragmentary information item is modified by the master display device. By employing such a configuration, because the accurate time and date at which the fragmentary information item is modified can be learned, the master display device and the slave display device can easily synchronize structured display information in which a plurality of fragmentary information items are structured and can quickly and reliably synchronize their displays based on the structured display information.

Furthermore, in the above described configuration, the master display device and the slave display device may also perform communication based on XMPP (Extensible Messaging and Presence Protocol). It is to be noted that XMPP is an XML-based protocol that is under standardization by the XMPP Standards Foundation (XSF), which has become independent of the XMPP working group of the Internet Engineering Task Force (IETF). Using XMPP, a variety of applications including instant messaging, presence ("what situation the counterpart is now placed in"), multi-user chatting, audio or video telephone, coordinated working, content syndication, and the like can be dynamically controlled and real-time communication can be achieved in communication systems such as the Internet. A plurality of extension protocols (XMPP Extension Protocols: XEPs) suitable for these purposes have been standardized in XMPP.

By employing such a configuration, real time messaging (information exchange) can be achieved between the master display device and the slave display device, and information messaged on the basis of XMPP and information displayed on the display unit of the master display device and the display unit of the slave display device can be easily and reliably associated with each other through the ID information.

Furthermore, in the above described configuration, information transmitted and received between the master display device and the slave display device may also be an html file with extended meta information. Here, the html file with extended meta information may include data in any format that can be represented in a version of html (Hyper Text Markup Language) suitable for communication based on XMPP (text data, image data, audio data, video data, and the like). It is to be noted that in addition to this data, meta information which is information associated with that data (attribute information) may also be included. The meta information may include attribute information associated with messaging based on XMPP, such as ID information, access right information, user information, access model information, positional information, and the like. Here, using the attribute information associated with messaging based on XMPP (the ID information, the access information, the user information, the access model information, the positional information, etc.) as the meta information in this manner is referred to as extension.

By employing such a configuration, data in any format that can be represented in a version of html suitable for communication based on XMPP (text data, image data, audio data, video data, etc.) can be transmitted and received between the master display device and the slave display device and there is no limit to the combination of such data items.

Furthermore, in the above described configuration, the slave display device may send the master display device a request to set the master display device to send, when the master display device modifies the fragmentary information item, the above described notice from the master display device to the slave display device, and the master display device may set itself accordingly in advance. By employing such a configuration, when a fragmentary information item constituting a part of the structured display information is modified at the master display device, the slave display device can quickly learn that the fragmentary information item has been modified. As a result, when a fragmentary information item constituting a part of the structured display information is modified, the slave display device can quickly and reliably perform operations such as requesting the master display device to send the modified fragmentary information item and can share the same structured display information with the master display device. Therefore, the master display device and the slave display device can easily synchronize structured display information in which a plurality of fragmentary information items are structured and can quickly and reliably synchronize their displays based on the structured display information.

Furthermore, in order to achieve the above described object, a master display device according to the invention may be a master display device that shares structured display information in which a plurality of fragmentary information items each including display data are structured with a slave display device through communication via a network and that produces the same display as the slave display device on the basis of the structured display information, wherein the master display device may include a communication unit that, when the fragmentary information item constituting a part of the structured display information is modified, sends the slave display device a notice reporting that the fragmentary information item is modified and ID information for identifying the modified fragmentary information item.

The master display device configured as described above, upon modifying a fragmentary information item constituting a part of structured display information, may send the slave display device a notice reporting that the fragmentary information item constituting a part of the structured display information has been modified and ID information for identifying the modified fragmentary information item. As a result, when a fragmentary information item constituting a part of the structured display information is modified, the slave display device can quickly learn that the fragmentary information item has been modified and can recognize which fragmentary information item has been modified through the ID information. Therefore, when a fragmentary information item constituting a part of the structured display information is modified, the slave display device, after receiving the notice and the ID information, can quickly and reliably perform operations such as requesting the master display device to send the modified fragmentary information item and can share the same structured display information with the master display device. As a result, the master display device can easily synchronize structured display information in which a plurality of fragmentary information items are structured with the slave display device and can quickly and reliably synchronize their displays based on the structured display information.

In the master display device configured as described above, the fragmentary information item may also include the ID information, and the communication unit may also send the modified fragmentary information item to the slave display device.

By employing such a configuration, when a fragmentary information item constituting a part of the structured display information is modified, the modified fragmentary information item can be sent to the slave display device. As a result, when a fragmentary information item constituting a part of the structured display information is modified, the slave display device, after receiving the notice, the ID information, and the modified fragmentary information item, can quickly and reliably recognize the modified fragmentary information item through the ID information and can performs operations such as editing the structured display information. Therefore, the master display device can easily synchronize structured display information in which a plurality of fragmentary information items are structured with the slave display device and can quickly and reliably synchronize their displays based on the structured display information.

Furthermore, in the master display device configured as described above, the fragmentary information item may also include a hash value for determining the sameness of contents of the fragmentary information item. By employing such a configuration, the master display device can determine the sameness of contents of the fragmentary information item sent to the slave display device through the hash value. As a result, the master display device can reliably synchronize structured display information in which a plurality of fragmentary information items are structured with the slave display device and can reliably synchronize their displays based on the structured display information.

Furthermore, in the master display device configured as described above, the fragmentary information item may also include update time and date information indicating the latest time and date at which the fragmentary information item is modified. By employing such a configuration, the master display device can learn about the accurate time and date at which the fragmentary information item is modified. As a result, the master display device can easily synchronize structured display information in which a plurality of fragmentary information items are structured with the slave display devices and can quickly and reliably synchronize their displays based on the structured display information.

Furthermore, the master display device configured as described above may also perform communication based on XMPP with the slave display device. By employing such a configuration, real time messaging (information exchange) can be achieved between the master display device and the slave display device, and information messaged on the basis of XMPP and information displayed on the master display device and the slave display device can be easily and reliably associated with each other through the ID information.

Furthermore, in the master display device configured as described above, information may be sent by the communication unit may also include an html file with extended meta information. By employing such a configuration, the master display device can send data in any format that can be represented in a version of html suitable for communication based on XMPP (text data, image data, audio data, video data, etc.) to the slave display device and there is no limit to the combination of such data items.

Furthermore, the master display device configured as described above may set itself in advance to send, when the fragmentary information item is modified, the notice reporting that the fragmentary information item is modified to the slave display device. By employing such a configuration, when a fragmentary information item constituting a part of the structured display information is modified, a notice reporting that the fragmentary information item has been modified can be quickly sent to the slave display device. As a result, when the master display device modifies a fragmentary information item constituting a part of the structured display information, the slave display devices, after receiving the notice, can quickly and reliably perform operations such as requesting the master display device to send the modified fragmentary information item and can share the same structured display information with the master display device. Therefore, the master display device can easily synchronize structured display information in which a plurality of fragmentary information items are structured with the slave display devices and can quickly and reliably synchronize their displays based on the structured display information.

Furthermore, in order to achieve the above described object, a slave display device according to the invention may be a slave display device that shares structured display information in which a plurality of fragmentary information items each including display data are structured with a master display device through communication via a network and that produces the same display as the master display device on the basis of the structured display information, wherein the slave display device may include a communication unit that, when the master display device modifies the fragmentary information item constituting a part of the structured display information, receives a notice reporting that the fragmentary information item is modified and ID information for identifying the modified fragmentary information item from the master display device.

The slave display device configured as described above, when the master display device modifies a fragmentary information item constituting a part of the structured display information, may receive a notice reporting that the fragmentary information item constituting a part of the structured display information has been modified and ID information for identifying the modified fragmentary information item. As a result, the slave display device can, when a fragmentary information item constituting a part of the structured display information is modified, quickly learn that the fragmentary information item has been modified without inquiring the master display device whether any fragmentary information item constituting a part of the structured display information has been modified or not, and can recognize which fragmentary information item has been modified through the ID information. Therefore, when a fragmentary information item constituting a part of the structured display information is modified, the slave display device can quickly and reliably perform operations such as requesting the master display device to send the modified fragmentary information item and can share the same structured display information with the master display device. As a result, the slave display device can easily synchronize structured display information in which a plurality of fragmentary information items are structured with the master display device and can quickly and reliably synchronize their displays based on the structured display information.

In the slave display device configured as described above, the fragmentary information item may also include the ID information, and the communication unit may also receive the modified fragmentary information item from the master display device.

Furthermore, the slave display device configured as described above may also include a control unit that edits the structured display information on the basis of the fragmentary information item received by the communication unit and a display unit that produces a display based on the edited structured display information, wherein the display unit may display display data included in the fragmentary information item identified through the ID information.

By employing such a configuration, when a fragmentary information item constituting a part of the structured display information is modified, the slave display device can quickly and reliably edit the structured display information and can produce the same display as the master display device. As a result, the slave display device can easily synchronize structured display information in which a plurality of fragmentary information items are structured with the master display device and can quickly and reliably synchronize their displays based on the structured display information.

In the slave display device configured as described above, the fragmentary information item may also include a hash value for determining the sameness of contents of the fragmentary information item. By employing such a configuration, the slave display device can determine the sameness of contents of the fragmentary information item received from the master display device through the hash value. As a result, the slave display device can reliably synchronize structured display information in which a plurality of fragmentary information items are structured with the master display device and can reliably synchronize their displays based on the structured display information.

In the slave display device configured as described above, the fragmentary information item may also include update time and date information indicating the latest time and date at which the fragmentary information item is modified. By employing such a configuration, the slave display device can learn about the accurate time and date at which the fragmentary information item is modified. As a result, the slave display device can easily synchronize structured display information in which a plurality of fragmentary information items are structured with the master display device and can quickly and reliably synchronize their displays based on the structured display information.

The slave display device configured as described above may also perform communication based on XMPP with the master display device. By employing such a configuration, real time messaging (information exchange) can be achieved between the slave display device and the master display device, and information massaged on the basis of XMPP and information displayed on the slave display device can be easily and reliably associated with each other through the ID information.

In the slave display device configured as described above, information sent by the communication unit may also include an html file with extended meta information. By employing such a configuration, the slave display device can receive data in any format that can be represented in a version of html suitable for communication based on XMPP (text data, image data, audio data, video data, etc.) from the master display device and there is no limit to the combination of such data items.

The slave display device configured as described above may also set the master display device such that the slave display device receives, when the master display device modifies the fragmentary information item, the notice from the master display device. By employing such a configuration, when a fragmentary information item constituting a part of the structured display information is modified at the master display device, the slave display device can quickly learn that the fragmentary information item has been modified. As a result, when a fragmentary information item constituting a part of the structured display information is modified, the slave display device can quickly and reliably perform operations such as requesting the master display device to send the modified fragmentary information item and can share the same structured display information with the maser display device. Therefore, the slave display device can easily synchronize structured display information in which a plurality of fragmentary information items are structured with the master display device and can quickly and reliably synchronize their displays based on the structured display information.

Furthermore, in order to achieve the above described object, a communication system according to the invention may be a communication system in which the above described master display device and the above described slave display device share structured display information in which a plurality of fragmentary information items each including display data are structured through communication via a network and the master display device and the slave display device produce the same display on the basis of the structured display information.

In the communication system configured as described above, the master display device, upon modifying a fragmentary information item constituting a part of the structured display information, may send the slave display device a notice reporting that the fragmentary information item constituting a part of the structured display information has been modified and ID information for identifying the modified fragmentary information item. As a result, when a fragmentary information item constituting a part of the structured display information is modified, the slave display device can quickly learn that the fragmentary information item has been modified without inquiring the master display device whether any fragmentary information item constituting a part of the structured display information has been modified or not, and can recognize which fragmentary information item has been modified through the ID information. Therefore, when a fragmentary information item constituting a part of the structured display information is modified, the slave display device can quickly and reliably perform operations such as requesting the master display device to send the modified fragmentary information item and can share the same structured display information with the master display device. As a result, the master display device and the slave display device can easily synchronize structured display information in which a plurality of fragmentary information items are structured and can quickly and reliably synchronize their displays based on the structured display information.

In the communication system configured as described above, the master display device and the slave display device may also perform communication based on XMPP. By employing such a configuration, real time messaging (information exchange) can be performed between the master display device and the slave display device, and information messaged on the basis of XMPP and information displayed on the display unit in the master display device and the display unit in the slave display device can be easily and reliably associated with each other through the ID information.

Furthermore, according to the invention, the master display device, upon modifying a fragmentary information item constituting a part of structured display information, can send the slave display device a notice reporting that the fragmentary information item constituting a part of the structured display information has been modified and ID information for identifying the modified fragmentary information item. As a result, when a fragmentary information item constituting a part of the structured display information is modified, the slave display device can quickly learn that the fragmentary information item has been modified without inquiring the master display device whether any fragmentary information item constituting a part of the structured display information has been modified or not and can recognize which fragmentary information item has been modified through the ID information. Therefore, when a fragmentary information item constituting a part of structured display information is modified, the slave display device can quickly and reliably perform operations such as requesting the master display device to send the modified fragmentary information item and can share the same structured display information with the master display device. As a result, the master display device and the slave display device can easily synchronize structured display information in which a plurality of fragmentary information items are structured and can quickly and reliably synchronize their displays based on the structured display information.

Furthermore, according to the invention, when a fragmentary information item constituting a part of structured display information is modified, the slave display device can quickly and reliably edit the structured display information and can produce the same display as the master display device. As a result, the master display device and the slave display device can easily synchronize structured display information in which a plurality of fragmentary information items are structured and can quickly and reliably synchronize their displays based on the structured display information.

Furthermore, according to the invention, it is possible to determine the sameness of contents of a fragmentary information item sent from the master display device to the slave display device through the hash value. As a result, the master display device and the slave display device can reliably synchronize structured display information in which a plurality of fragmentary information items are structured and can reliably synchronize their displays based on the structured display information.

Furthermore, according to the invention, it is possible to learn about the accurate time and date at which the fragmentary information item is modified. As a result, the master display device and the slave display device can easily synchronize structured display information in which a plurality of fragmentary information items are structured and can quickly and reliably synchronize their displays based on the structured display information.

Furthermore, according to the invention, real time messaging (information exchange) can be performed between the master display device and the slave display device, and information messaged on the basis of XMPP and information displayed on the display unit in the master display device and the display unit in the slave display device can be easily and reliably associated with each other through the ID information.

Furthermore, according to the invention, data in any format that can be represented in a version of html suitable for communication based on XMPP (text data, image data, audio data, video data, etc.) can be transmitted and received between the master display device and the slave display device and there is no limit to the combination of such data items.

The present invention can be effectively applied to multi-site electronic conference systems used within communities such as workplaces and schools, video telephone conversations between family members who are geographically separated with each other, online meetings within communities, and the like, and can be used for industrial purposes.

## Claims

1. A communication method, comprising the steps of:
a master display device and a slave display device sharing structured display information in which a plurality of fragmentary information items each including display data are structured through communication via a network and producing same displays on the basis of the structured display information; and
the master display device, upon modifying the fragmentary information item constituting a part of the structured display information, sending the slave display device a notice reporting that the fragmentary information item is modified and ID information for identifying the modified fragmentary information item.

2. The communication method of claim 1, wherein
the fragmentary information item comprises the ID information, and
the master display device, upon modifying the fragmentary information item constituting a part of the structured display information, further sends the slave display device the modified fragmentary information item.

3. The communication method of claim 2, wherein the slave display device edits the structured display information on the basis of the received fragmentary information item and produces a display based on the edited structured display information.

4. The communication method of claim 2 or 3, wherein the fragmentary information item comprises a hash value for determining the sameness of contents of the fragmentary information item.

5. The communication method of any of claims 2 to 4, wherein the fragmentary information item comprises update time and date information indicating a latest time and date at which the fragmentary information item is modified by the master display device.

6. The communication method of any of claims 1 to 5, wherein the master display device and the slave display device perform communication based on XMPP.

7. The communication method of claim 6, wherein information that is transmitted and received between the master display device and the slave display device is an html file with extended meta information.

8. The communication method of any of claims 1 to 7, wherein
the slave display device sends the master display device a request to set the master display device to send, when the master display device modifies the fragmentary information item, the notice from the master display device to the slave display device, and
the master display device sets itself accordingly in advance.

9. A master display device, comprising:
a communication unit for sending a slave display device structured display information in which a plurality of fragmentary information items each including display data are structured and for, when the fragmentary information item constituting a part of the structured display information is modified, sending the slave display device a notice reporting that the fragmentary information item is modified and ID information for identifying the modified fragmentary information item; and
a display unit for producing a same display as the slave display device on the basis of the structured display information shared with the slave display device.

10. The master display device of claim 9, wherein
the fragmentary information item comprises the ID information, and
the communication unit further sends the modified fragmentary information item to the slave display device.

11. The master display device of claim 10, wherein the fragmentary information item comprises a hash value for determining the sameness of contents of the fragmentary information item.

12. The master display device of claim 10 or 11, wherein the fragmentary information item comprises update time and date information indicating a latest time and date at which the fragmentary information item is modified.

13. The master display device of any of claims 9 to 12, wherein the communication unit performs communication based on XMPP with the slave display device.

14. The master display device of claim 13, wherein information that is sent by the communication unit to the slave display device comprises an html file with extended meta information.

15. The master display device of any of claims 9 to 14, wherein the master display device sets itself in advance to send, when the fragmentary information item is modified, the notice reporting that the fragmentary information item is modified to the slave display device.

16. A slave display device, comprising:
a communication unit for receiving structured display information in which a plurality of fragmentary information items each including display data are structured from a master display device and for, when the master display device modifies the fragmentary information item constituting a part of the structured display information, receiving a notice reporting that the fragmentary information item is modified and ID information for identifying the modified fragmentary information item from the master display device; and
a display unit for producing a same display as the master display device on the basis of the structured display information shared with the master display device.

17. The slave display device of claim 16, wherein,
the fragmentary information item comprises the ID information, and
the communication unit receives the modified fragmentary information item from the master display device.

18. The slave display device of claim 17, further comprising a control unit for editing the structured display information on the basis of the fragmentary information item received by the communication unit,
wherein the display unit displays the display data included in the fragmentary information item identified through the ID information on the basis of the edited structured display information.

19. The slave display device of claim 17 or 18, wherein the fragmentary information item comprises a hash value for determining the sameness of contents of the fragmentary information item.

20. The slave display device of any of claims 17 to 19, wherein the fragmentary information item comprises update time and date information indicating a latest time and date at which the fragmentary information item is modified.

21. The slave display device of any of claims 16 to 20, wherein the communication unit performs communication based on XMPP with the master display device.

22. The slave display device of claim 21, wherein information that is received by the communication unit from the master display device comprises an html file with extended meta information.

23. The slave display device of any of claims 16 to 22, wherein the slave display device sets the master display device such that the slave display device receives, when the master display device modifies the fragmentary information item, the notice from the master display device.

24. A communication system, wherein:
the master display device of any of claims 9 to 15 and the slave display device of any of claims 16 to 23 share structured display information in which a plurality of fragmentary information items each including display data are structured through communication via a network and produce same displays on the basis of the structured display information.

25. The communication system of claim 24, wherein the master display device and the slave display device perform communication based on XMPP.
